(19) Europäisches Patentamt / European Patent Office / Office européen des brevets

(11) **EP 3 597 536 B1**

(12) **FASCICULE DE BREVET EUROPEEN**

(45) Date de publication et mention de la délivrance du brevet:
**13.01.2021 Bulletin 2021/02**

(51) Int Cl.:
**B64C 27/00** *(2006.01)* **B64D 43/00** *(2006.01)*

(21) Numéro de dépôt: **19185359.7**

(22) Date de dépôt: **10.07.2019**

(54) **PROCEDE ET DISPOSITIF DE DETERMINATION PREDICTIVE DE PARAMETRES CARACTERISTIQUES DU FONCTIONNEMENT D'UN AERONEF A VOILURE TOURNANTE POUR LA REALISATION D'UNE MANŒUVRE PREDETERMINEE**

VERFAHREN UND VORRICHTUNG ZUR VORAUSSAGENDEN BESTIMMUNG VON CHARAKTERISTISCHEN FUNKTIONSPARAMETERN EINES DREHFLÜGELFLUGZEUGS FÜR DIE DURCHFÜHRUNG EINES VORBESTIMMTEN MANÖVERS

METHOD AND DEVICE FOR PREDICTIVE DETERMINATION OF CHARACTERISTIC PARAMETERS OF THE OPERATION OF A ROTARY-WING AIRCRAFT FOR THE PERFORMANCE OF A PREDETERMINED MANOEUVRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.07.2018 FR 1800756**

(43) Date de publication de la demande:
**22.01.2020 Bulletin 2020/04**

(73) Titulaire: **Airbus Helicopters
13725 Marignane Cedex (FR)**

(72) Inventeur: **GERMANETTI, Serge
83470 SAINT MAXIMIN LA SAINTE BAUME (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
EP-A1- 3 064 437 WO-A1-2012/087303
WO-A2-2005/120954 DE-A1- 2 014 913
US-A1- 2005 278 084

## Description

La présente invention est du domaine de l'aide au pilotage des aéronefs, et des aéronefs à voilures tournantes en particulier.

La présente invention concerne un procédé et un dispositif de détermination prédictive d'au moins une puissance caractéristique nécessaire à la réalisation d'une manœuvre prédéterminée d'un aéronef à voilure tournante telle qu'une mise en vol stationnaire et/ou un atterrissage de l'aéronef et d'une puissance maximale disponible. La présente invention concerne également un procédé et un dispositif de détermination prédictive d'au moins une puissance caractéristique nécessaire à la réalisation d'une manœuvre prédéterminée et de paramètres caractéristiques du fonctionnement de l'aéronef associés à chaque puissance afin d'anticiper un dépassement d'une limitation d'au moins un de ces paramètres caractéristiques susceptibles d'intervenir au moment de la réalisation de la manœuvre prédéterminée.

Le fonctionnement d'un aéronef s'effectue généralement sous la surveillance de plusieurs paramètres caractéristiques par l'intermédiaire de plusieurs instruments situés sur une planche de bord de l'aéronef. Ces paramètres caractéristiques sont représentatifs du fonctionnement courant de l'aéronef et en particulier de son moteur ou bien de son installation motrice.

Pour des raisons physiques, il existe de nombreuses limitations sur ces paramètres caractéristiques qui doivent être prises en compte à chaque instant du fonctionnement de l'aéronef. Ces différentes limitations peuvent dépendre des conditions extérieures ainsi que du mode de fonctionnement de l'aéronef. Par exemple, pour un aéronef à voilure tournante comportant une installation motrice munie de deux turbomoteurs et d'une boîte de transmission principale de puissance, l'installation motrice entraînant en rotation au moins un rotor principal et éventuellement un rotor anticouple, tel un rotor arrière, ces paramètres caractéristiques peuvent être, entre autres, la vitesse de rotation $Ng$ du générateur de gaz de chaque turbomoteur, la température $T4$ d'éjection des gaz à l'entrée de la turbine libre de chaque turbomoteur et le couple moteur $C_m$ de chaque turbomoteur.

Ainsi, le pilote d'un aéronef doit surveiller, au cours d'un vol et en permanence, les valeurs courantes de ces paramètres caractéristiques sur plusieurs instruments situés sur la planche de bord de l'aéronef et comparer les valeurs courantes de ces paramètres caractéristiques avec leurs limitations respectives.

De plus, ces limitations sont généralement différentes selon la phase de vol de l'aéronef et/ou les conditions extérieures telles que la température et l'altitude par exemple. En effet, selon chaque phase de vol et/ou les conditions extérieures ainsi que selon le mode de fonctionnement de l'installation motrice, la puissance maximale que peut fournir l'installation motrice est différente. Par suite, les limitations des différents paramètres caractéristiques du fonctionnement de l'aéronef peuvent être différentes notamment selon la puissance disponible au niveau de chaque turbomoteur.

Aujourd'hui, certaines aides apportées au pilote permettent de limiter les paramètres que doit surveiller le pilote.

On connaît notamment les documents FR 2749545 et FR 2756256 qui décrivent un Instrument de Première Limitation souvent désignée par l'acronyme « IPL ». Cet Instrument de Première Limitation identifie, parmi différents paramètres caractéristiques, le paramètre caractéristique critique comme étant celui qui est le plus proche de sa valeur limite. La valeur courante de ce paramètre caractéristique critique et sa valeur limite sont alors regroupées sur un affichage unique, respectivement pour chaque turbomoteur le cas échéant, permettant de limiter le nombre d'instruments nécessaires pour surveiller le fonctionnement de l'aéronef afin de simplifier la tâche du pilote. Ces IPL permettent ainsi d'afficher par l'intermédiaire de la valeur courante du paramètre caractéristique critique et de sa valeur limite une marge de puissance dont dispose l'aéronef ou bien chaque turbomoteur.

Par exemple, la valeur courante du paramètre caractéristique critique et sa valeur limite peuvent être affichées selon une échelle graduée en couple moteur pour chaque turbomoteur caractérisant ainsi la marge de puissance disponible de chaque turbomoteur de l'aéronef, comme décrit dans le document FR 2749545.

La valeur courante du paramètre caractéristique critique et sa valeur limite peuvent également être affichées selon une échelle graduée en pas collectif, le pas collectif indiquant l'incidence des pales du rotor principal de l'aéronef par rapport au vent incident induite par la commande de pas collectif de ces pales, caractérisant ainsi la marge de puissance disponible de l'aéronef dans son ensemble, comme décrit dans le document FR 2756256.

Toutefois, les limitations utilisées par les instruments de la planche de bord et cet IPL en particulier ne représentent pas les limitations réelles de chaque turbomoteur, mais des limitations prédéterminées correspondant par exemple à une puissance minimale garantie d'un turbomoteur sur sa durée de sa vie.

En effet, le motoriste établit, par calculs ou bien par essais, les courbes de puissance disponible d'un turbomoteur en fonction notamment de l'altitude de l'aéronef et de la température extérieure, et cela pour chacun des régimes de puissance utilisables par chaque turbomoteur. De plus, le motoriste détermine ces courbes de puissance disponible selon différents niveau de vieillissement de chaque turbomoteur entre un turbomoteur neuf et un turbomoteur arrivé à la fin de sa durée de vie.

Par suite, une puissance minimale garantie sur l'ensemble de la durée de vie d'un turbomoteur est définie. La valeur de cette puissance minimale garantie est variable notamment en fonction notamment de l'altitude de l'aéronef et de la température extérieure, et correspond à la puissance fournie par un turbomoteur vieilli à savoir un turbomoteur ayant atteint sa durée de vie maximale. Ainsi, tout turbomoteur en fonctionnement normal, c'est-à-dire ne subissant aucune panne, peut toujours délivrer une puissance supérieure et au minimum égale à cette puissance minimale garantie sur l'ensemble de sa durée de vie.

De la sorte, les instruments de la planche de bord et l'IPL en particulier qui utilisent des limitations correspondant à cette puissance minimale garantie sont favorables en termes de sécurité, le pilote disposant toujours d'une puissance réellement disponible au niveau de chaque turbomoteur qui est généralement supérieure et au minimum égale à la puissance maximale indiquée par les instruments de la planche de bord ou par l'IPL.

Cependant, la marge de puissance disponible de chaque moteur de l'installation motrice de l'aéronef vis-à-vis de cette puissance minimale garantie peut être déterminée lors d'un contrôle de « santé moteur », également désigné par l'acronyme EPC pour la désignation en langue anglaise « Engine Power Check ». Un tel contrôle de santé moteur est généralement préconisé par le fabricant du moteur et doit être réalisé régulièrement. Un contrôle de santé moteur permet de vérifier l'état de fonctionnement d'un moteur et de déterminer le niveau de détérioration et/ou de vieillissement de ce moteur. Un contrôle de santé moteur permet ainsi de vérifier périodiquement les performances maximales et réelles du moteur par rapport aux performances minimales garanties.

Le contrôle de santé moteur est ainsi effectué en comparant les performances actuelles du moteur avec des performances de ce moteur obtenues sur un banc d'essais et déclarées par le fabricant. Le contrôle de santé moteur permet de déterminer une marge d'un ou plusieurs paramètres de surveillance de ce moteur par rapport à une valeur limite de chaque paramètre de surveillance et, par suite, de déterminer la marge de puissance disponible qui est la différence entre la puissance maximale qu'il peut fournir et sa puissance minimale garantie pour les conditions environnantes actuelles. Les conditions environnantes actuelles sont par exemple les informations relatives à l'environnement de l'aéronef et plus particulièrement les conditions atmosphériques. De plus, on peut déduire, grâce à ces paramètres de surveillance, si le moteur a subi des détériorations et s'il doit subir des opérations de maintenance, notamment afin de pouvoir fournir de nouveau les puissances mécaniques pour lesquelles il est adapté.

Par exemple, si ce moteur est un turbomoteur, un paramètre de surveillance peut être la température interne $T4$ des gaz à l'entrée de la turbine libre, la vitesse de rotation $Ng$ du générateur de gaz ou bien le couple moteur $C_m$ délivré par le turbomoteur. En outre, un contrôle de santé moteur doit être réalisé selon une procédure prédéterminée par le fabricant. Ce contrôle de santé moteur peut être effectué en cours de vol ou bien entre deux vols.

De plus, les instruments de la planche de bord d'un aéronef, y compris l'IPL, indiquent les valeurs courantes et les limites d'un ou de plusieurs paramètres caractéristiques. De fait, lorsqu'un pilote envisage de réaliser une manœuvre, il doit se fier à son expérience et à la différence qu'il constate entre ces valeurs courantes et leurs limites afin d'estimer s'il dispose d'une marge suffisante sur les paramètres caractéristiques pour réaliser cette manœuvre.

Ensuite, le pilote aura la confirmation seulement au cours de cette manœuvre qu'aucun paramètre caractéristique ne dépasse sa limite et qu'il peut donc réaliser cette manœuvre en toute sécurité.

Dans le cas contraire et suivant la manœuvre réalisée, le pilote peut arrêter cette manœuvre pour revenir à une phase de vol sûre, chaque paramètre caractéristique restant alors en dessous de sa limite. C'est typiquement le cas lorsque le pilote d'un aéronef engage une descente et qu'il peut utiliser l'inertie de l'aéronef et/ou la puissance totale disponible au niveau de l'installation motrice pour réaliser une manœuvre d'évitement d'un obstacle. Cependant, pour certaines manœuvres, un retour en arrière est impossible une fois la manœuvre engagée et un accident peut se produire alors, par exemple lors d'un atterrissage et de la transition hors effet de sol et avec effet de sol.

Cette mauvaise estimation du pilote de la marge disponible, notamment en termes de puissance, est à l'origine de nombreux accidents d'aéronefs à voilures tournantes et en particulier lors des phases d'atterrissage, de vols stationnaires en particulier à proximité du sol et de décollage en mode vertical pur.

Les documents FR 3033316 et WO 2012/087303 pallient partiellement ces inconvénients et décrivent un procédé et un système de surveillance de paramètres d'un aéronef utilisant la marge de puissance disponible de ses moteurs vis-à-vis de la puissance minimale garantie, cette marge de puissance disponible ayant été déterminée lors d'un contrôle de santé moteur.

Le document FR 3033316, qui est l'art antérieure le plus proche, décrit un procédé de détermination de paramètres caractéristiques d'un aéronef permettant notamment au pilote de visualiser simultanément les valeurs courantes et les limites réelles d'au moins un paramètre caractéristique du fonctionnement de cet aéronef ainsi que la valeur de chaque paramètre caractéristique nécessaire à la réalisation d'une manœuvre prédéterminée. Un paramètre caractéristique du fonctionnement de cet aéronef est en particulier la puissance de son installation motrice.

Le document WO 2012/087303 décrit un système de surveillance de puissance pour un aéronef à voilure tournante indiquant, à l'instant courant et en fonction des conditions courantes de vol, d'une part une puissance disponible au niveau de son installation motrice et d'autre part une puissance nécessaire pour la réalisation d'un vol stationnaire ainsi que la puissance utilisée actuellement.

Selon ces documents, la puissance nécessaire à la réalisation de la manœuvre prédéterminée, telle que la réalisation d'un vol stationnaire, est estimée en fonction des conditions courantes de vol de l'aéronef. Cependant, cette manœuvre ne sera pas réalisée dans ces conditions courantes de vol de l'aéronef, mais dans les conditions que l'aéronef rencontrera lors de la réalisation proprement dite de cette manœuvre. En effet, ces conditions de vol peuvent évoluer suivant l'avancée de l'aéronef et notamment son changement d'altitude, par exemple lorsque l'aéronef est dans une phase d'approche pour un atterrissage ou bien pour une mission de secours nécessitant une mise en vol stationnaire.

Le pilote de l'aéronef peut ainsi avoir une information suivant laquelle l'aéronef dispose d'une puissance disponible suffisante pour la réalisation d'une manœuvre prédéterminée dans les conditions courantes de vol de l'aéronef alors qu'une fois sur la zone de réalisation de cette manœuvre prédéterminée, les conditions de vol de l'aéronef sont généralement différentes et la puissance réellement disponible peut alors ne pas être suffisante pour la réalisation de cette manœuvre prédéterminée, l'aéronef risquant alors de subir un crash.

L'arrière plan technologique de l'invention comporte les documents US 2005/0278084, DE 2014913 et WO 2005/120954.

L'art antérieur ne permet donc pas d'anticiper et de prédire précisément les conditions de vol de l'aéronef qu'il rencontrera lors de la réalisation d'une manœuvre prédéterminée et, par suite, une puissance nécessaire à la réalisation de cette manœuvre prédéterminée. Cette manœuvre prédéterminée est par exemple une mise en vol stationnaire réalisée en fin d'une phase d'approche, notamment en vue d'un atterrissage.

La présente invention a alors pour objet de proposer un procédé et un dispositif permettant de s'affranchir des limitations mentionnées ci-dessus, en permettant de déterminer de façon prédictive au moins une puissance caractéristique nécessaire à la réalisation d'une manœuvre prédéterminée d'un aéronef à voilure tournante ainsi qu'une puissance maximale disponible de cet aéronef selon les conditions de vol présentes à la position de réalisation de cette manœuvre prédéterminé afin d'anticiper un dépassement d'une limitation d'au moins un des paramètres caractéristiques de l'aéronef susceptibles d'intervenir au moment de la réalisation de la manœuvre prédéterminée.

Un objet selon la présence invention est un procédé de détermination prédictive d'au moins une puissance caractéristique nécessaire à une réalisation d'une manœuvre prédéterminée d'un aéronef à voilure tournante, l'aéronef comportant une pluralité de capteurs, au moins un calculateur ou bien un processeur, au moins une mémoire et au moins un dispositif de visualisation.

L'aéronef à voilure tournante comporte également un rotor principal muni de pales principales, un rotor anticouple muni de pales secondaires des moyens de commande des déplacements de l'aéronef et une installation motrice munie d'au moins un moteur, par exemple un turbomoteur, et d'un moyen de transmission mécanique de puissance. Le moyen de transmission mécanique de puissance est une boîte de transmission principale de puissance entraînant en rotation le rotor principal et le rotor anticouple. Les moyens de commande sont des moyens de commande de la variation du pas collectif et du pas cyclique des pales principales du rotor principal ainsi que du pas collectif des pales secondaires du rotor anticouple.

Le procédé selon l'invention comporte les étapes principales suivantes :

- une première mesure d'une pression atmosphérique courante Pc et d'une température courante $Tc$ extérieures à l'aéronef à une altitude courante Zc de l'aéronef,
- une première détermination d'au moins un paramètre relatif soit à l'altitude courante $Zc$ de l'aéronef, soit à une altitude prédictive $Zp$ de réalisation de la manœuvre prédéterminée de l'aéronef, soit à l'altitude courante $Zc$ de l'aéronef et à l'altitude prédictive $Zp$ de réalisation de la manœuvre prédéterminée,
- une deuxième détermination d'une pression atmosphérique prédictive $Pp$ à l'altitude prédictive $Zp$,
- une troisième détermination d'une température prédictive $Tp$ à l'altitude prédictive $Zp$,
- une quatrième détermination d'une puissance maximale disponible au niveau de l'installation motrice à l'altitude prédictive Zp en prenant en compte la pression atmosphérique prédictive $Pp$ et la température prédictive $Tp$, et
- une cinquième détermination d'au moins une puissance caractéristique de l'installation motrice nécessaire à la réalisation d'une manœuvre prédéterminée de l'aéronef.

De la sorte, le procédé selon l'invention permet avantageusement de déterminer les conditions de vol de l'aéronef à l'altitude prédictive $Zp$ correspondant au point de réalisation de la manœuvre prédéterminée que l'aéronef doit réaliser, ces conditions de vol étant généralement différentes des conditions courantes de vol de l'aéronef. Ensuite, le procédé selon l'invention permet d'estimer, en fonction de ces conditions de vol à l'altitude prédictive $Zp$, la puissance maximale disponible au niveau de l'installation motrice de l'aéronef à l'altitude prédictive $Zp$.

La connaissance de cette puissance maximale disponible au niveau de l'installation motrice de l'aéronef à l'altitude prédictive $Zp$ permet ensuite au pilote d'anticiper avantageusement la réalisation de la manœuvre prédéterminée à l'altitude prédictive $Zp$, la puissance caractéristique de l'installation motrice nécessaire à la réalisation de cette manœuvre prédéterminée de l'aéronef étant également estimée. La manœuvre prédéterminée peut ainsi être préparée et réalisée en sécurité lorsque la puissance maximale disponible à l'altitude prédictive $Zp$ est suffisante pour permettre la réalisation de la manœuvre prédéterminée. De la sorte, le pilote peut anticiper avantageusement tout dépassement d'une limitation de la puissance maximale de l'installation motrice de l'aéronef susceptible d'intervenir au moment de la réalisation de la manœuvre prédéterminée.

Le procédé selon l'invention peut alors comporter une étape supplémentaire d'affichage, simultanément, de la puissance maximale disponible au niveau de l'installation motrice à l'altitude prédictive $Zp$ et d'au moins une puissance caractéristique de l'installation motrice nécessaire à la réalisation d'une manœuvre prédéterminée de l'aéronef sur une même représentation de type graphique sur un dispositif de visualisation de l'aéronef.

Cette représentation de type graphique peut prendre plusieurs formes. Par exemple, la représentation de type graphique peut être un cadran de forme sensiblement circulaire ou bien selon une échelle verticale.

Le procédé selon l'invention peut aussi afficher, lors de l'étape supplémentaire d'affichage, sur la représentation de type graphique, une puissance minimale garantie $P_G$ de l'installation motrice. Cette puissance minimale garantie $P_G$ est déterminée en fonction de la température prédictive $Tp$ et de la pression atmosphérique prédictive $Pp$ à l'altitude prédictive $Zp$.

De la sorte, le pilote de l'aéronef peut visualiser, simultanément pour les mêmes conditions à l'altitude prédictive $Zp,$ une puissance maximale disponible au niveau de l'installation motrice, une puissance caractéristique nécessaire à la réalisation d'une manœuvre prédéterminée et la puissance minimale garantie $P_G$. L'affichage de ces valeurs permet avantageusement au pilote de se rendre compte tout d'abord, en particulier lorsqu'il fait régulièrement les mêmes vols, que la marge de puissance disponible diminue avec le temps et avec le vieillissement de l'installation motrice.

De plus, l'affichage de ces valeurs permet également au pilote de constater que s'il peut réaliser certaines manœuvres exigeantes en termes de puissance aujourd'hui, c'est grâce à la marge de puissance disponible, la puissance caractéristique nécessaire à la réalisation de ces manœuvresexigeantes étant supérieures à la puissance minimale garantie $Pc$ et qu'avec le vieillissement de l'installation motrice et la baisse associée de la marge de puissance, ces manœuvresne pourront plus être réalisées avec cet aéronef.

De plus, le procédé selon l'invention peut également déterminer une puissance instantanée fournie par l'installation motrice de l'aéronef et l'afficher simultanément à la puissance maximale disponible et à chaque puissance caractéristique.

L'installation motrice peut comporter un seul moteur. Dans ce cas, la puissance maximale disponible, la puissance caractéristique au niveau de l'installation motrice et la puissance instantanée fournie par l'installation motrice sont sensiblement égales respectivement à une puissance maximale disponible, une puissance caractéristique au niveau de ce moteur et la puissance instantanée fournie par ce moteur.

L'installation motrice peut aussi comporter au moins deux moteurs. Dans ce cas, la puissance maximale disponible, la puissance caractéristique au niveau de l'installation motrice et la puissance instantanée fournie par l'installation motrice sont réparties entre ces moteurs. Lorsque ces moteurs sont identiques, ces puissances sont de préférence réparties de façon sensiblement uniforme entre ces moteurs. Toutefois, une répartition particulière peut être définie entre chaque moteur de l'installation motrice, que ces moteurs soient identiques ou bien différents. La puissance maximale disponible et la puissance caractéristique respectivement au niveau de chaque moteur ainsi que la puissance instantanée respective de chaque moteur peuvent être affichées lors de l'affichage en lieu et place des puissances de l'installation motrice. L'équipage de l'aéronef dispose alors d'une représentation de type graphique pour chaque moteur de l'installation motrice.

On peut afficher sur le dispositif de visualisation de l'aéronef la puissance caractéristique et le cas échéant la puissance instantanée fournie par l'installation motrice ainsi que la puissance minimale garantie $P_G$ selon un pourcentage de la puissance maximale, la puissance maximale correspondant alors à une indication 100% sur le dispositif de visualisation de l'aéronef. Ce type d'affichage permet de faire abstraction de toutes valeurs numériques.

Cependant, la puissance maximale et la puissance caractéristique ainsi que le cas échéant la puissance instantanée fournie par l'installation motrice et la puissance minimale garantie Pc peuvent être affichées selon un pourcentage d'une valeur de référence de la puissance de l'installation motrice correspondant alors à une indication 100% sur le dispositif de visualisation de l'aéronef.

La manœuvre prédéterminée d'un aéronef à voilure tournante est par exemple un vol stationnaire, qui est consommateur d'une importante puissance mécanique fournie par l'installation motrice, réalisé notamment en vue d'un atterrissage de l'aéronef, le procédé selon l'invention étant alors enclenché au début de la phase d'approche de cette mise en vol stationnaire et exécuté pendant toute la durée de cette phase d'approche. Cette manœuvre prédéterminée peut être un vol stationnaire hors effet de sol ou bien un vol stationnaire dans l'effet de sol. Le procédé selon l'invention peut par exemple afficher simultanément les puissances caractéristiques de l'installation motrice nécessaires à la réalisation d'un vol stationnaire hors effet de sol et d'un vol stationnaire dans l'effet de sol. Ce vol stationnaire est notamment réalisé dans le cas d'une procédure d'atterrissage de l'aéronef.

De la sorte, le procédé selon l'invention permet d'assister le pilote de l'aéronef dans l'anticipation et dans l'éventuelle réalisation d'une procédure d'atterrissage, réduisant significativement les risques liés à cette phase d'atterrissage. En effet, le pilote visualise, avant d'engager la mise en vol stationnaire, s'il dispose d'une marge de puissance suffisante, et en particulier lors des transitions entre une zone où l'aéronef est soumis à un effet de sol et une zone où l'aéronef n'est pas soumis à cet effet de sol.

La première mesure de la pression atmosphérique courante $Pc$ et de la température courante $Tc$ extérieures à l'aéronef est effectuée par l'intermédiaire de capteurs traditionnellement présents dans un aéronef.

Ensuite, selon un premier mode de réalisation de l'invention, au cours de la première détermination, un seul paramètre relatif à l'altitude courante $Zc$ et à l'altitude prédictive $Zp$ peut être déterminé. Ce paramètre relatif à l'altitude courante $Zc$ et à l'altitude prédictive $Zp$ est alors égal à une variation d'altitude $\Delta Z$ entre l'altitude courante $Zc$ et l'altitude prédictive $Zp$.

Dans ce cas, la première détermination comporte par exemple une deuxième mesure d'une hauteur courante $Hc$ de l'aéronef par rapport au sol, effectuée par l'intermédiaire d'un radioaltimètre, désigné également « radiosonde ». La variation d'altitude $\Delta Z$ est alors égale à la hauteur courante $Hc$ de l'aéronef par rapport au sol.

Selon un autre exemple, la première détermination peut comporter les sous-étapes complémentaires suivantes :

- une sixième détermination d'une vitesse de descente $Vz$ de l'aéronef,
- une définition d'un temps d'atteinte $Ts$ de l'altitude prédictive $Zp$ par l'aéronef, et
- un premier calcul de la variation d'altitude $\Delta Z$ durant le temps d'atteinte $Ts$, la variation d'altitude $\Delta Z$ étant égale au produit de la vitesse de descente $Vz$ et du temps d'atteinte $Ts$.

Le temps d'atteinte $Ts$ de l'altitude prédictive $Zp$, peut être par exemple une valeur prédéterminée avant le décollage de l'aéronef ou bien en cours de vol par l'équipage de l'aéronef.

Lors de la sixième détermination d'une vitesse de descente $Vz$ de l'aéronef, ladite vitesse de descente $Vz$ de l'aéronef est définie égale à une valeur moyenne de la vitesse verticale de l'aéronef sur une durée prédéfinie, par exemple égale aux 10 dernières secondes de vol (10s) de l'aéronef avant la réalisation de cette sixième détermination.

Selon un deuxième mode de réalisation de l'invention, au cours de la première détermination, deux paramètres relatifs pour un premier paramètre à l'altitude courante $Zc$ et pour un second paramètre à l'altitude courante $Zc$ et à l'altitude prédictive $Zp$ peuvent également être déterminés. Un premier paramètre est égal à l'altitude courante $Zc$ et un second paramètre est égal à une variation d'altitude $\Delta Z$ entre l'altitude courante $Zc$ et l'altitude prédictive $Zp$.

La variation d'altitude $\Delta Z$ peut être déterminée selon un des deux exemples précédemment évoqués pour le premier mode de réalisation alors que l'altitude courante $Zc$ de l'aéronef est déterminée par un dispositif traditionnellement présent dans un aéronef, tel qu'un capteur barométrique ou bien un récepteur GNSS pour la désignation en langue anglaise « Global Navigation Satellite System ».

L'altitude prédictive $Zp$ peut alors être calculée à partir de ces deux paramètres et est égale à une différence entre l'altitude courante $Zc$ et la variation d'altitude $\Delta Z$.

Selon un troisième mode de réalisation de l'invention, au cours de la première détermination, deux paramètres relatifs pour un premier paramètre à l'altitude courante $Zc$ et pour un second paramètre à l'altitude prédictive $Zp$ sont déterminés. Un premier paramètre est égal à l'altitude courante $Zc$ et un second paramètre est égal à l'altitude prédictive $Zp$.

L'altitude courante $Zc$ de l'aéronef est déterminée par un dispositif traditionnellement présent dans un aéronef. L'altitude prédictive $Zp$ du point de réalisation de la manœuvre prédéterminée de l'aéronef peut être déterminée de différentes manières.

Par exemple, l'altitude prédictive $Zp$ peut être définie par l'équipage de l'aéronef, la valeur de cette altitude prédictive $Zp$ est directement fournie par l'intermédiaire d'un dispositif de saisie disponible dans l'aéronef.

L'altitude prédictive $Zp$ peut également être extraite d'une « base de données terrain » désignée par l'acronyme TAWS pour la désignation en langue anglaise « Terrain Awareness Warning System ». Cette base de données terrain TAWS associe notamment une altitude à chaque point du terrain survolé par l'aéronef et le point de réalisation de la manœuvre prédéterminée peut alors être identifié ou désigné dans cette base de données terrain TAWS.

Selon un premier exemple d'utilisation d'une telle base de données terrain, la première détermination comporte les sous-étapes suivantes :

- une septième détermination d'une position courante de l'aéronef, typiquement par l'intermédiaire d'un récepteur GNSS,
- une première estimation de l'altitude prédictive $Zp$ égale à une altitude du terrain enregistré dans la base de données terrain à une verticale de la position courante de l'aéronef.

Selon un deuxième exemple d'utilisation d'une telle base de données terrain, la première détermination comporte les sous-étapes suivantes :

- la septième détermination d'une position courante de l'aéronef,
- une deuxième estimation d'une trajectoire courante de l'aéronef, cette trajectoire courante étant définie par exemple par la direction du vecteur vitesse d'avancement de l'aéronef,
- une troisième estimation de l'altitude prédictive $Zp$ égale à une altitude d'un point de contact entre la trajectoire courante de l'aéronef et le terrain enregistré dans la base de données terrain.

L'altitude prédictive *Zp* peut également être définie par une alerte associée à la base de données terrain TAWS et prévenant d'une proximité et d'une possible collision de l'aéronef avec le terrain. L'altitude prédictive *Zp* est définie comme pour le deuxième exemple égale à l'altitude du point de contact entre la trajectoire de l'aéronef et le terrain.

Pour ce troisième mode de réalisation, la variation d'altitude *ΔZ* entre l'altitude courante *Zc* et l'altitude prédictive *Zp* peut alors être calculée à partir de ces deux paramètres et est égale à une différence entre l'altitude courante *Zc* et 'altitude prédictive *Zp*.

Ensuite, en fonction d'un ou de deux paramètres relatifs soit à l'altitude courante *Zc*, soit à l'altitude prédictive *Zp*, soit à l'altitude courante *Zc* et à l'altitude prédictive *Zp*, la deuxième détermination permet de déterminer la pression atmosphérique prédictive *Pp* à l'altitude prédictive *Zp*.

Lorsque que la première détermination est selon le premier mode de réalisation et détermine uniquement la variation d'altitude comme paramètre, la deuxième détermination comporte les sous-étapes suivantes :

- une quatrième estimation de l'altitude courante *Zc* en fonction uniquement de la pression atmosphérique courante *Pc* ou bien en fonction de la pression atmosphérique courante *Pc* et de la température courante *Tc*,
- une huitième détermination d'une variation de pression atmosphérique *ΔP* entre l'altitude courante *Zc* et l'altitude prédictive *Zp* en fonction de la variation d'altitude *ΔZ* et à l'aide de courbes de variation de la pression atmosphérique avec l'altitude, et en fonction de l'altitude courante *Zc*, et
- un deuxième calcul de la pression atmosphérique prédictive *Pp*, la pression atmosphérique prédictive *Pp* étant déterminée en ajoutant la variation de pression atmosphérique *ΔP* à la pression atmosphérique courante *Pc*.

L'altitude est dite « barométrique » lorsqu'elle est déterminée uniquement avec la pression atmosphérique courante *Pc*. L'altitude est dite « densité » lorsqu'elle est déterminée grâce à la pression atmosphérique courante *Pc* et à la température courante *Tc*, la température courante *Tc* permettant notamment de corriger l'altitude fournie par la pression atmosphérique courante Pc.

La variation de pression atmosphérique *ΔP* est déterminée à l'aide d'une ou plusieurs séries courbes de variation, désignées également abaques, de la pression atmosphérique avec l'altitude, et en fonction de l'altitude courante *Zc*.

Lorsque que la première détermination est selon le deuxième ou troisième mode de réalisation et détermine comme paramètres l'altitude courante *Zc* ainsi que la variation d'altitude ou bien l'altitude prédictive *Zp*, la deuxième détermination de la pression atmosphérique prédictive *Pp* comporte les sous-étapes suivantes :

- un troisième calcul de deux pressions normales respectivement pour l'altitude courante *Zc* et pour l'altitude prédictive *Zp* en appliquant une formule de nivellement barométrique,
- une neuvième détermination d'une variation de pression atmosphérique *ΔP* égale à la différence entre les deux pressions normales relatives à l'altitude courante *Zc* et à l'altitude prédictive *Zp*, et
- un quatrième calcul de la pression atmosphérique prédictive *Pp*, la pression atmosphérique prédictive *Pp* étant déterminée en ajoutant la variation de pression atmosphérique *ΔP* à la pression atmosphérique courante *Pc*.

Une formule de nivellement barométrique permet de calculer la pression atmosphérique en fonction de l'altitude, en prenant des hypothèses sur un gradient vertical de température en fonction de l'altitude ainsi que sur une valeur de la pression atmosphérique pour une altitude de référence, généralement le niveau de la mer correspondant à une altitude nulle.

Une telle formule de nivellement barométrique permet donc le calcul de la pression atmosphérique à une certaine altitude, sans avoir besoin de connaître la température ou le gradient vertical de température réel. La précision des valeurs ainsi obtenues peut être toutefois limitée, puisque l'état moyen de l'atmosphère correspondant aux hypothèses choisies est généralement différent de l'état réel de l'atmosphère.

Cependant, le procédé selon l'invention utilisant une variation de pression atmosphérique *ΔP* égale à la différence entre deux pressions normales grâce à une telle formule de nivellement barométrique permet avantageusement de limiter voire d'annuler les imprécisions générées par ces hypothèses.

Quelle que soit le mode de réalisation lié à la première détermination, la troisième détermination de la température prédictive *Tp* comporte les sous-étapes suivantes :

- un cinquième calcul d'une variation de température *ΔT* entre l'altitude courante *Zp* et l'altitude prédictive *Zp* en fonction la variation d'altitude *ΔZ*, et
- un sixième calcul de la température prédictive *Tp* à l'altitude prédictive *Zp*, la température prédictive *Tp* étant déterminée en ajoutant la variation de température *ΔT* à la température courante *Tc*.

Il est connu que la variation de la température en fonction de l'altitude est sensiblement linéaire, en particulier pour les altitudes auxquelles évoluent les aéronefs à voilure tournante. Par exemple, la température diminue de 0,65 degré Celsius (0.65°C) pour une augmentation de l'altitude de 100 mètres (100m).

Entre outre, la puissance totale fournie par l'installation motrice ou bien la puissance fournie par un moteur de cette installation motrice est fonction de différents paramètres de cette installation motrice et/ou de chaque moteur de cette installation motrice comme décrit par exemple dans le document FR 3033316.

Par exemple, la puissance instantanée fournie par un moteur est définie en fonction d'un couple moteur $C_m$ fourni par ce moteur sur un arbre de transmission et d'une vitesse instantanée $N_m$ de rotation de l'arbre de transmission du moteur, selon la formule $W_{inst} = C_m.N_m$.

En outre, la puissance fournie par l'installation motrice de l'aéronef est répartie d'une part en une puissance de vol de l'aéronef pour le vol proprement dit de l'aéronef et d'autre part en une puissance accessoire pour alimenter des équipements de l'aéronef. Cette puissance accessoire est utilisée par exemple pour alimenter la climatisation de la cabine de l'aéronef, les équipements électriques de l'aéronef, tels que l'avionique, les équipements hydrauliques de l'aéronef ou encore un filtre à sable lorsque l'aéronef en comporte un. Cette puissance accessoire, composée principalement d'une puissance électrique et d'une puissance hydraulique, peut être déterminée de façon connue.

La puissance de vol de l'aéronef est quant à elle répartie entre le rotor principal et le rotor anticouple afin d'assurer la sustentation et les déplacements de l'aéronef. Cette puissance de vol de l'aéronef est donc la somme de la puissance fournie au niveau du rotor principal et de la puissance fournie au niveau rotor anticouple.

Lorsqu'une installation motrice comporte un seul moteur, la puissance que doit fournir ce moteur, et donc l'installation motrice, pour la réalisation de la manœuvre prédéterminée est égale à la somme de la puissance caractéristique de ce moteur et de la puissance accessoire de l'aéronef.

Lorsqu'une installation motrice comporte plusieurs moteurs identiques, la puissance que doit fournir l'installation motrice pour la réalisation de la manœuvre prédéterminée est égale à la somme de la puissance caractéristique de chaque moteur, représentant la puissance caractéristique de l'installation motrice, et de la puissance accessoire de l'aéronef.

La puissance instantanée fournie par chaque moteur de l'installation motrice peut être déterminée de façon connue, par exemple par l'intermédiaire du couple instantané délivré par le moteur. De plus, lorsque ce moteur est un turbomoteur, cette puissance instantanée peut être déterminée par l'intermédiaire de la température interne instantanée $T4$ des gaz à l'entrée de la turbine libre de ce turbomoteur ou bien de la vitesse instantanée de rotation $Ng$ de son générateur de gaz.

La puissance maximale disponible au niveau de chaque moteur de l'installation motrice est déterminée en utilisant des courbes de performances de l'aéronef et en prenant en compte une marge de puissance disponible vis-à-vis d'une puissance minimale garantie $Pc$ de chaque moteur comme décrit par exemple dans le document FR 3033316. La puissance maximale disponible est fonction des conditions environnantes actuelles et de la phase de vol de l'aéronef.

La marge de puissance de chaque moteur de l'installation motrice peut être déterminée de façon connue et périodique lors d'un contrôle de santé moteur. Dès lors, le procédé selon l'invention peut prendre en compte cette marge de puissance, la quatrième détermination de la puissance maximale disponible au niveau de l'installation motrice comportant les étapes complémentaires suivantes :

-   une dixième détermination d'une marge de puissance de chaque moteur de l'installation motrice vis-à-vis d'une puissance minimale garantie $Pc,$ la marge de puissance caractérisant un état de vieillissement de chaque moteur de l'installation motrice, et
-   un septième calcul de la puissance maximale disponible au niveau de chaque moteur, cette puissance maximale disponible étant égale à la somme de la puissance minimale garantie $P_G$ et de la marge de puissance du moteur.

Toutefois, un certain temps de vol peut s'écouler entre deux contrôles de santé moteur et la marge de puissance connue ne correspond alors plus à l'état réel de vieillissement de chaque moteur. Afin de prendre en compte cet état réel de vieillissement de chaque moteur, une nouvelle détermination de la marge de puissance de chaque moteur peut être faite par le procédé selon l'invention.

Dans ce cas, la dixième détermination de la marge de puissance de chaque moteur comporte les étapes complémentaires suivantes :

-   une onzième détermination d'une courbe d'évolution de la marge de puissance de chaque moteur en fonction d'au moins deux derniers contrôles de santé moteur réalisés préalablement,
-   une douzième détermination d'un temps d'atteinte $Ts$ de l'altitude prédictive $Zp$ par l'aéronef, et
-   une treizième détermination de la marge de puissance de chaque moteur, de l'installation motrice à partir de la courbe d'évolution de la marge de puissance de chaque moteur, et en prenant en compte le temps de fonctionnement de chaque moteur, depuis un dernier contrôle de santé moteur réalisé jusqu'à l'instant courant et en prenant en compte le temps d'atteinte $Ts.$

La courbe d'évolution de la marge de puissance de chaque moteur est ainsi définie à partir des derniers contrôles de santé moteur réalisés préalablement. Une telle courbe d'évolution de la marge de puissance peut être utilisée à partir de deux contrôles de santé moteur. Cependant, une courbe d'évolution de la marge de puissance nécessite de préférence au moins cinq contrôles de santé moteur réalisés afin d'être plus représentative du vieillissement de chaque moteur.

Le temps d'atteinte *Ts* déterminé lors de la douzième détermination est de préférence égale à un rapport de la variation d'altitude *ΔZ* entre l'altitude prédictive *Zp* et l'altitude courante *Zc* de l'aéronef par la vitesse de descente *Vz*. Toutefois, si ce calcul n'est pas réalisable, le temps d'atteinte *Ts* peut être égale à une valeur prédéterminée avant le décollage de l'aéronef ou bien à une valeur prédéterminée en cours de vol par l'équipage de l'aéronef.

Par ailleurs, la puissance caractéristique de l'installation motrice nécessaire à la réalisation d'une manœuvre prédéterminée de l'aéronef peut être déterminée comme décrit par exemple dans le document FR 3033316. De plus, il est possible d'utiliser une masse estimée *M* de l'aéronef afin de déterminer cette puissance caractéristique de l'installation motrice. En effet, l'installation motrice de l'aéronef doit fournir une puissance suffisante afin que la portance du rotor principal s'oppose au moins à cette masse estimée *M* de l'aéronef. Cette masse estimée *M* de l'aéronef peut être déterminée avant le décollage de l'aéronef. Lors du vol, la masse instantanée de l'aéronef diminue suite notamment à la consommation de carburant et est alors inférieure à cette masse estimée *M.* Par suite, cette masse estimée *M* de l'aéronef peut être utilisée afin de déterminer chaque puissance caractéristique pour la réalisation d'une manœuvre prédéterminée de l'aéronef.

Cependant, cette puissance caractéristique est alors surévaluée par rapport à la puissance mécanique réellement nécessaire à la manœuvre prédéterminée de l'aéronef, la masse estimée *M* de l'aéronef étant supérieure à sa masse instantanée. Cette puissance caractéristique surévaluée va dans le sens de la sécurité, la puissance mécanique réellement nécessaire étant inférieure à cette puissance caractéristique surévaluée. Par contre, pour certaines manœuvres nécessitant une importante puissance mécanique, cette puissance caractéristique surévaluée peut être supérieure à la puissance maximale disponible alors que la puissance mécanique réellement nécessaire à la manœuvre prédéterminée de l'aéronef est inférieure à cette puissance maximale disponible pour chaque moteur. De fait, cette manœuvre n'est pas réalisée par le pilote qui pense à tort que l'installation motrice ne peut pas fournir une puissance totale suffisante.

De préférence, une masse instantanée estimée *M*$_{inst}$ de l'aéronef est alors définie et utilisée afin de déterminer plus précisément chaque puissance caractéristique pour la réalisation d'une manœuvre prédéterminée de l'aéronef. Cette masse instantanée estimée *M*$_{inst}$ de l'aéronef est par exemple déterminée en calculant la consommation de carburant au cours du vol, la masse de carburant consommé étant alors déduite de la masse estimée *M* de l'aéronef avant le décollage.

Par ailleurs, le procédé selon l'invention peut également permettre de déterminer et d'afficher des valeurs d'au moins un paramètre caractéristique *P*$_i$ relatif à l'état ou au fonctionnement de l'aéronef ou bien de son installation motrice, ce paramètre caractéristique *P*$_i$ étant associé à la puissance de l'installation motrice. Le paramètre caractéristique *P*$_i$ peut également être un paramètre caractéristique relatif à la position ou aux déplacements de l'aéronef par rapport à son environnement.

Comme décrit dans le document FR 3033316, pour au moins un paramètre caractéristique *P*$_i$, au moins une première valeur *P*$_i$_*lim* correspondant à la puissance maximale disponible de l'installation motrice, au moins une seconde valeur *P*$_i$_*X* correspondant à une puissance caractéristique de l'installation motrice nécessaire à la réalisation d'une manœuvre prédéterminée et/ou au moins une troisième valeur *P*$_i$_*inst* correspondant à la puissance instantanée fournie par l'installation motrice peuvent également être déterminées et affichées sur une même représentation de type graphique.

De la sorte, le pilote de l'aéronef visualise directement d'une part une différence entre la troisième valeur *P*$_i$_*inst* et la première valeur *P*$_i$_*lim* et d'autre part la marge dont dispose le pilote entre la troisième valeur *P*$_i$_*inst* et la seconde valeur *P*$_i$_*X* nécessaire pour réaliser la manœuvre prédéterminée à l'altitude prédictive *Zp*.

Par ailleurs, il est possible de limiter le nombre d'informations fournies au pilote de l'aéronef en affichant des informations concernant le paramètre *P*$_i$ le plus critique. On peut par exemple afficher chaque première valeur *P*$_i$_*lim,* chaque seconde valeur *P*$_i$_*X* et chaque troisième valeur *P*$_i$_*inst* le cas échéant sur un instrument de première limitation de l'aéronef.

En outre, le procédé selon l'invention est réalisé de préférence lorsque l'aéronef est en vol stabilisé. Un vol de l'aéronef est considéré comme stabilisé lorsque des paramètres caractéristiques de l'aéronef, et en particulier une vitesse de descente *Vz* et une vitesse propre *Vp* de l'aéronef ainsi qu'un couple *Cm* fourni par l'installation motrice, sont considérés comme stables simultanément.

Un paramètre caractéristique de l'aéronef est considéré comme stable par exemple lorsque, ce paramètre caractéristique étant appliqué à un filtre passe-haut, typiquement de type « wash out » avec une constante de temps τ, la différence entre deux valeurs consécutives séparées par cette constante de temps τ de ce paramètre caractéristique est inférieure à un seuil prédéterminé.

Un paramètre caractéristique de l'aéronef peut également être considéré comme stable lorsqu'un dérivateur d'un tel filtre de type « wash out » passe-haut, appliqué à ce paramètre caractéristique est inférieur à un autre seuil prédéterminé.

Par ailleurs, les valeurs obtenues par un tel filtre de type « wash out » passe-haut pour chacune de ces paramètres caractéristiques de l'aéronef peuvent être utilisées dans les calculs effectués par le procédé selon l'invention. On obtient par exemple les valeurs filtrées suivantes pour les paramètres caractéristiques de l'aéronef :

- le couple Cm fourni par l'installation motrice :

$$Cm_{filtré} = Cm_{mesuré} \cdot \frac{\tau.p}{1+\tau.p},$$

avec p variable de Laplace,

- la vitesse propre Vp de l'aéronef :

$$Vp_{filtré} = Vp_{mesuré} \cdot \frac{\tau.p}{1+\tau.p},$$

et

- la vitesse de descente Vz de l'aéronef :

$$Vz_{filtré} = Vz_{mesuré} \cdot \frac{\tau.p}{1+\tau.p}.$$

La présente invention a aussi pour objet un dispositif de détermination prédictive d'au moins une puissance nécessaire à une réalisation d'une manœuvre prédéterminée d'un aéronef à voilure tournante, le dispositif comportant une pluralité de capteurs, au moins un calculateur, au moins une mémoire et au moins un dispositif de visualisation. Les capteurs fournissent des mesures de différentes informations relatives à l'environnement de l'aéronef et/ou à l'état et au fonctionnement de l'aéronef et de ses équipements et/ou à la position et aux déplacements de l'aéronef par rapport à son environnement, chaque calculateur recevant les mesures des capteurs et traitant ces informations.

L'aéronef peut également comporter un radioaltimètre pour déterminer une hauteur courante Hc de l'aéronef par rapport au sol. L'aéronef peut aussi comporter un capteur barométrique ou bien un récepteur GNSS afin de déterminer une altitude courante Zc de l'aéronef.

La mémoire stocke des courbes de performances de l'aéronef, une courbe d'évolution de la marge de puissance de chaque moteur, une ou plusieurs séries de courbes de variation de la pression atmosphérique en fonction de l'altitude et des instructions de calcul, le calculateur utilisant les instructions de calcul afin de mettre en œuvre le procédé de détermination prédictive d'au moins une puissance nécessaire à une réalisation d'une manœuvre prédéterminée d'un aéronef à voilure tournante précédemment décrit.

L'invention et ses avantages apparaîtront avec plus de détails dans le cadre de la description qui suit avec des exemples donnés à titre illustratif en référence aux figures annexées qui représentent :

- la figure 1, un aéronef à voilure tournante muni d'un dispositif de détermination prédictive d'au moins une puissance caractéristique nécessaire à une réalisation d'une manœuvre prédéterminée d'un aéronef à voilure tournante,
- les figures 2 et 3, deux schémas synoptiques d'un procédé de détermination prédictive d'au moins une puissance caractéristique nécessaire à une réalisation d'une manœuvre prédéterminée d'un aéronef à voilure tournante,
- les figures 4 à 6, des représentations de type graphique de puissances de l'installation motrice de l'aéronef, et
- la figure 7, une courbe d'évolution de la marge de puissance d'un moteur de l'installation motrice de l'aéronef.

Les éléments présents dans plusieurs figures distinctes sont affectés d'une seule et même référence.

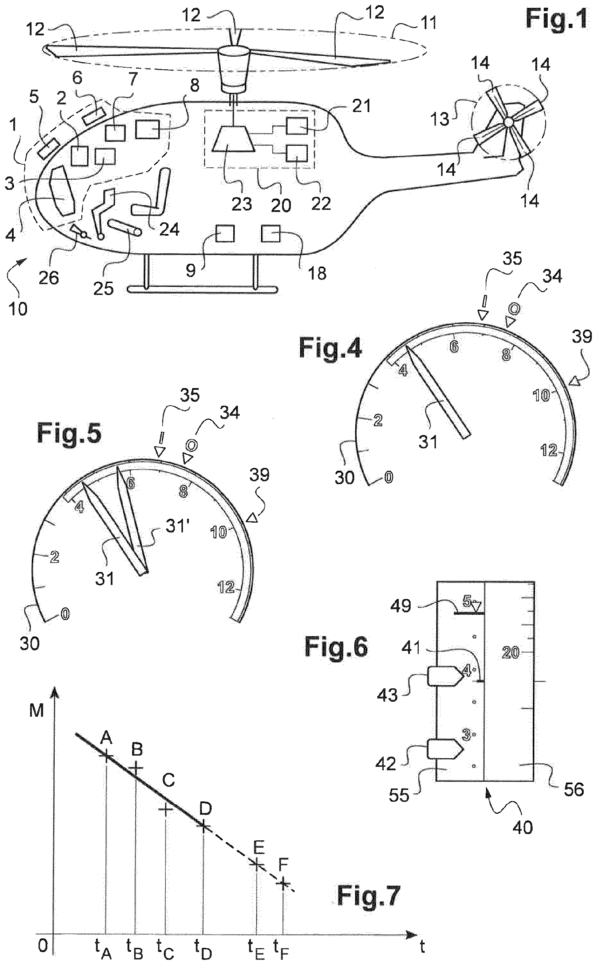

Sur la figure 1 est représenté un aéronef 10 à voilure tournante comportant un rotor principal 11 muni de pales principales 12, un rotor arrière 13 ayant notamment une fonction anticouple, ce rotor arrière 13 étant muni de pales secondaires 14. L'aéronef 10 comporte également une installation motrice 20 munie de deux turbomoteurs 21,22, une boîte de transmission principale de puissance 23 entraînant en rotation le rotor principal 11 et le rotor arrière 13 et des moyens de commande 24,25,26 composés d'un levier de pas collectif 24 et d'un manche cyclique 25 qui sont respectivement des moyens de commande de la variation du pas collectif et du pas cyclique des pales principales 12 ainsi que d'un palonnier 26 qui est un moyen de commande de la variation du pas collectif des pales secondaires 14. Ces moyens de commande 24,25,26 permettent au pilote de commander des déplacements de l'aéronef 10. Les deux turbomoteurs 21,22 sont identiques et comportent un générateur de gaz et une turbine libre. Ces deux moteurs 21,22 fournissent sensiblement la même puissance à la boîte de transmission principale de puissance 23 lorsque ces deux moteurs 21,22 fonctionnent correctement.

Toutefois, les deux moteurs 21,22 peuvent être différents et fournir alors des puissances différentes à la boîte de transmission principale de puissance 23. Une répartition particulière de ces puissances est alors définie entre ces moteurs 21,22.

L'aéronef 10 comporte enfin un dispositif 1 de détermination prédictive d'au moins une puissance caractéristique nécessaire à une réalisation d'une manœuvre prédéterminée de l'aéronef 10 comportant une pluralité de capteurs 5-8, un calculateur 2, une mémoire 3 et au moins un dispositif de visualisation 4 tel un écran. Ces capteurs 5-8 permettent de mesurer différentes informations relatives à l'environnement de l'aéronef 10, à l'état et au fonctionnement de l'aéronef 10 et de l'installation motrice 20, à l'état des moyens de commande 24,25,26, ainsi qu'à la position et aux déplacements de l'aéronef 10.

Les capteurs 5,6 sont par exemple un dispositif de mesure de la pression atmosphérique courante $Pc$ et un dispositif de mesure de la température courante $Tc$ extérieures à l'aéronef 10. Les capteurs 7,8 sont par exemple un moyen de détermination de l'attitude et du cap de l'aéronef 10 tel un dispositif AHRS pour l'expression en langue anglaise « Attitude and Heading Reference System » et un système de contrôle de l'installation motrice 20. L'aéronef 10 comporte également un radioaltimètre 9 déterminant la hauteur courante $Hc$ de l'aéronef 10 par rapport au sol et un dispositif de mesure 18 d'une altitude courante $Zc$ de l'aéronef 10, tel qu'un capteur barométrique ou bien un récepteur GNSS.

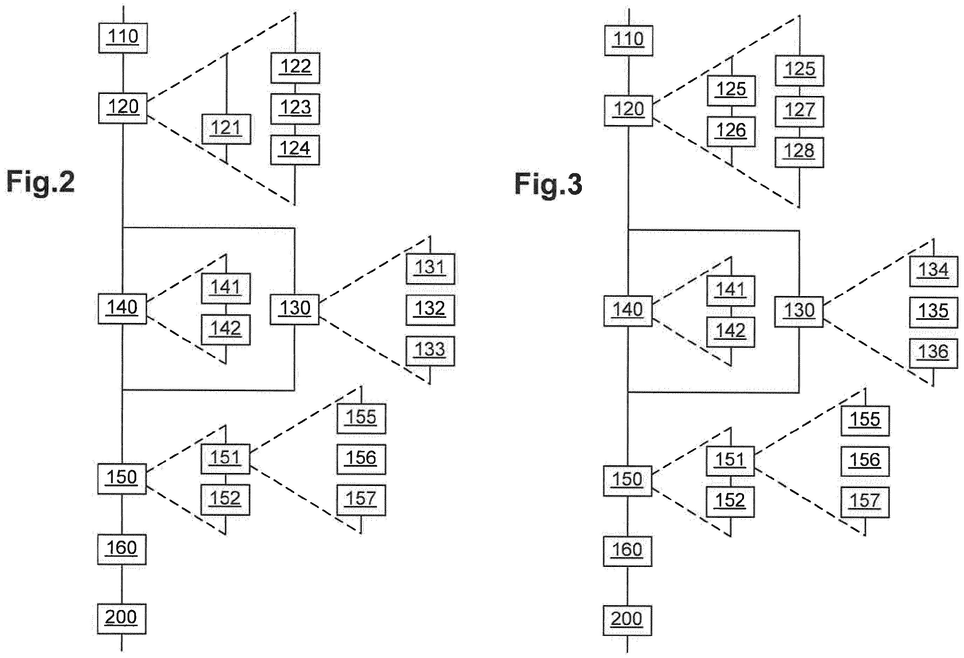

Le dispositif 1 peut mettre en œuvre un procédé de détermination prédictive d'au moins une puissance caractéristique nécessaire à une réalisation d'une manœuvre prédéterminée de l'aéronef 10 dont les schémas synoptiques de deux modes de réalisation sont représentés sur les figures 2 et 3. La mémoire 3 stocke des courbes de performances de l'aéronef 10, une courbe d'évolution de la marge de puissance pour chaque moteur de l'installation motrice 20 de l'aéronef 10 et des instructions de calcul. Le calculateur 2 utilise ces instructions de calcul afin de mettre en œuvre ce procédé.

Ces deux modes de réalisation de ce procédé comportent dix étapes principales et se différencient au niveau des sous-étapes de certaines étapes principales.

Au cours d'une première mesure 110, on mesure différentes informations relatives à l'environnement de l'aéronef 10, à savoir une pression atmosphérique courante $Pc$ et d'une température courante $Tc$ extérieures à l'aéronef 10. Ces informations sont notamment obtenues par l'intermédiaire des deux capteurs 5,6.

Au cours d'une première détermination 120, on détermine au moins un paramètre relatif soit à l'altitude courante $Zc$ de l'aéronef 10, soit à une altitude prédictive $Zp$ de réalisation de la manœuvre prédéterminée de l'aéronef 10, soit à l'altitude courante $Zc$ de l'aéronef 10 et à l'altitude prédictive $Zp$ de réalisation de la manœuvre prédéterminée.

Selon un premier mode de réalisation de ce procédé représenté sur la figure 2, un seul paramètre relatif à l'altitude courante $Zc$ et à l'altitude prédictive $Zp$ est déterminé au cours de cette première détermination 120. Ce paramètre est une variation d'altitude $\Delta Z$ entre l'altitude courante $Zc$ et l'altitude prédictive $Zp$.

Selon un premier exemple de ce premier mode de réalisation, la première détermination peut alors comporter une deuxième mesure 121 d'une hauteur courante $Hc$ de l'aéronef par rapport au sol, effectuée par l'intermédiaire du radioaltimètre 9, et égale à la variation d'altitude $\Delta Z$.

Selon un autre exemple de ce premier mode de réalisation, la première détermination 120 peut comporter les sous-étapes suivantes :

- une sixième détermination 122 d'une vitesse de descente $Vz$ de l'aéronef 10,
- une définition 123 d'un temps d'atteinte $Ts$ de l'altitude prédictive $Zp$ par l'aéronef 10, le temps d'atteinte $Ts$ pouvant être définie avant le décollage de l'aéronef 10 ou bien en cours de vol par l'équipage de l'aéronef 10, et
- une premier calcul 124 de la variation d'altitude $\Delta Z$ durant le temps d'atteinte $Ts$ par l'intermédiaire du calculateur 2, l'aéronef 10 évoluant avec la vitesse de descente $Vz$, la variation d'altitude $\Delta Z$ étant égale au produit de la vitesse de descente $Vz$ et du temps d'atteinte $Ts$.

Selon un deuxième mode de réalisation de ce procédé représenté sur la figure 3, deux paramètres sont déterminés au cours de la première détermination 120. Un premier paramètre est l'altitude courante $Zc$ et un second paramètre est l'altitude prédictive $Zp$. A partir de ces deux paramètres, la variation d'altitude $\Delta Z$ peut être calculée, égale à une différence entre l'altitude courante $Zc$ et à l'altitude prédictive $Zp$.

L'altitude courante $Zc$ de l'aéronef 10 est connue par l'intermédiaire du dispositif de mesure 18.

L'altitude prédictive $Zp$ du point de réalisation de la manœuvre prédéterminée de l'aéronef 10 peut être déterminée selon plusieurs méthodes.

Par exemple, l'altitude prédictive $Zp$ peut être définie par l'équipage de l'aéronef par l'intermédiaire d'un dispositif de saisie.

L'altitude prédictive $Zp$ peut également être extraite d'une « base de données terrain » TAWS stockée dans la mémoire 3. L'aéronef 10 comporte alors un récepteur GNSS permettant de définir la position courante de l'aéronef 10 par l'intermédiaire de ses coordonnées en latitude et longitude dans un repère terrestre. Ce récepteur GNSS peut alors être utilisé comme dispositif de mesure 18 afin de mesurer l'altitude courante $Zc$ de l'aéronef 10.

La première détermination 120 peut alors comporter les deux sous-étapes suivantes :

- une septième détermination 125 de la position courante de l'aéronef 10, et
- une première estimation 126 de l'altitude prédictive $Zp$ égale à une altitude du terrain enregistré dans la base de données terrain à la verticale de cette position courante de l'aéronef 10.

Dans ce cas, la trajectoire de l'aéronef 10 n'est pas prise en compte.

Toutefois, la trajectoire courante de l'aéronef 10 peut être utilisé pour déterminer l'altitude prédictive $Zp$ en extrayant un point de contact du terrain avec cette trajectoire dans la base de données terrain TAWS. La trajectoire de l'aéronef 10 est traditionnellement définie par la direction du vecteur vitesse d'avancement de l'aéronef 10.

Dans ce cas, la première détermination 120 comporte les trois sous-étapes suivantes :

- la septième détermination 125 de la position courante de l'aéronef 10,
- une deuxième estimation 127 d'une trajectoire courante de l'aéronef 10, et
- une troisième estimation 128 de l'altitude prédictive $Zp$ égale à une altitude d'un point de contact entre la trajectoire courante de l'aéronef 10 et le terrain enregistré dans la base de données terrain.

L'altitude prédictive $Zp$ peut également être définie par une alerte associée à la base de données terrain TAWS et prévenant d'une proximité et d'une possible collision de l'aéronef 10 avec le terrain. L'altitude prédictive $Zp$ est définie égale à l'altitude d'un point de contact entre l'aéronef 10 et le terrain, cette altitude étant extraite de la base de données terrain TAWS.

En outre, au cours la première détermination 120, les deux paramètres déterminés peuvent être l'altitude courante $Zc$ et la variation d'altitude $\Delta Z$ entre l'altitude courante $Zc$ et l'altitude prédictive $Zp$.

L'altitude courante $Zc$ est définie par l'intermédiaire du dispositif de mesure 18 comme précédemment et la variation d'altitude $\Delta Z$ peut être déterminée de façon identique au premier mode de réalisation.

L'altitude prédictive $Zp$ peut alors être calculée par l'intermédiaire du calculateur 2 à partir de ces deux paramètres, l'altitude prédictive $Zp$ étant égale à une différence entre l'altitude courante $Zc$ et la variation d'altitude $\Delta Z$.

Ensuite, au cours d'une deuxième détermination 130, on détermine une pression atmosphérique prédictive $Pp$ à l'altitude prédictive $Zp$.

Selon le premier mode de réalisation de ce procédé, la deuxième détermination 130 comporte les sous-étapes suivantes :

- une quatrième estimation 131 de l'altitude courante $Zc$ en fonction uniquement de la pression atmosphérique courante $Pc$ ou bien en fonction de la pression atmosphérique courante $Pc$ et de la température courante $Tc$,
- une huitième détermination 132 d'une variation de pression atmosphérique $\Delta P$ entre l'altitude courante $Zc$ et l'altitude prédictive $Zp$ en fonction de la variation d'altitude $\Delta Z$ et à l'aide de courbes de variation de la pression atmosphérique avec l'altitude, et en fonction de l'altitude courante $Zc$, ces courbes de variation de la pression atmosphérique étant stockées dans la mémoire 3, et
- un deuxième calcul 133 de la pression atmosphérique prédictive $Pp$ par l'intermédiaire du calculateur 2, la pression atmosphérique prédictive $Pp$ étant déterminée en ajoutant la variation de pression atmosphérique $\Delta P$ à la pression atmosphérique courante $Pc$.

La seule pression atmosphérique courante $Pc$ permet d'estimer l'altitude barométrique. La pression atmosphérique courante $Pc$ et la température courante $Tc$, utilisées simultanément, permet d'estimer l'altitude densité.

Selon le deuxième mode de réalisation de ce procédé, la deuxième détermination 130 comporte les sous-étapes suivantes :

- un troisième calcul 134 de deux pressions normales respectivement pour l'altitude courante $Zc$ et pour l'altitude prédictive $Zp$ en appliquant une formule de nivellement barométrique par l'intermédiaire du calculateur 2,
- une neuvième détermination 135 d'une variation de pression atmosphérique $\Delta P$ entre l'altitude courante $Zc$ et l'altitude prédictive $Zp$, la variation de pression atmosphérique $\Delta P$ étant égale à la différence entre les deux pressions normales relatives à l'altitude courante $Zc$ et à l'altitude prédictive $Zp$,
- un quatrième calcul 136 de la pression atmosphérique prédictive $Pp$ par l'intermédiaire du calculateur 2, la pression atmosphérique prédictive $Pp$ étant déterminée en ajoutant la variation de pression atmosphérique $\Delta P$ à la pression atmosphérique courante $Pc$.

Une formule de nivellement barométrique permet de calculer la pression atmosphérique en fonction de l'altitude, en prenant des hypothèses sur les conditions de variations de la température et la pression atmosphérique ainsi que sur une valeur de la pression atmosphérique pour une altitude de référence.

Par exemple, en prenant comme hypothèses, un gradient de température égal à 0.65°C pour 100m et, pour une altitude de référence égale à 0, correspondant au niveau de la mer, une température égale à 15°C et une pression atmosphérique égale à 1013.25 hectoPascal (1013.25hPa), on obtient la formule du nivellement barométrique suivante :

$$P(z) = 1013.25 \times \left(1 - \frac{0.0065 \times z}{288.15}\right)^{5.255}$$

avec la pression P exprimée en hectoPascal (ou millibars) et l'altitude z exprimée en mètres.

Par ailleurs, au cours d'une troisième détermination 140, on détermine une température prédictive $Tp$ à l'altitude prédictive $Zp$ en soustrayant une variation de température $\Delta T$ à la température courante $Tc$ à l'altitude courante $Zc$ de l'aéronef 10.

Dans ce but, la troisième détermination 140 de la température prédictive $Tp$ comporte les sous-étapes suivantes :

- un cinquième calcul 141 d'une variation de température $\Delta T$ entre l'altitude courante $Zp$ et l'altitude prédictive $Zp$ en fonction de la variation d'altitude $\Delta Z$, en utilisant par exemple une hypothèse pour le gradient de température, et

- un sixième calcul 142 de la température prédictive *Tp* à l'altitude prédictive *Zp*, par l'intermédiaire du calculateur 2, la température prédictive *Tp* étant déterminée en ajoutant la variation de température *ΔT* à la température courante *Tc*.

Les deux étapes de deuxième et troisième déterminations 130,140 peuvent être réalisées de façon simultanée ou bien de façon séquentielle.

Au cours d'une quatrième détermination 150, on détermine une puissance maximale disponible au niveau de l'installation motrice 20 à l'altitude prédictive *Zp* en prenant en compte la pression atmosphérique prédictive *Pp* et la température prédictive *Tp*.

La puissance maximale disponible au niveau de l'installation motrice 20 est égale à la somme des puissances maximales disponibles au niveau des deux moteurs 21,22 de l'installation motrice 20. Cette puissance maximale disponible au niveau d'un moteur 21,22 peut par exemple être égale à la puissance minimale garantie de chaque moteur déterminée en utilisant une courbe de performances de l'aéronef 10 en fonction de la pression atmosphérique et la température.

En outre, au cours de cette quatrième détermination 150, la puissance maximale disponible au niveau de l'installation motrice 20 peut être déterminée en prenant en compte le vieillissement de chaque moteur 21,22. Dans ce but, la quatrième détermination 150 comporte des étapes complémentaires :

- une dixième détermination 151 d'une marge de puissance de l'installation motrice 20 vis-à-vis d'une puissance minimale garantie *P_G*, la marge de puissance caractérisant un état de vieillissement de l'installation motrice 20, et
- un septième calcul 152 de la puissance maximale disponible au niveau de l'installation motrice 20, cette puissance maximale disponible étant égale à la somme de la puissance minimale garantie *P_G*, déterminée par l'intermédiaire d'une courbe de performances en fonction de la pression atmosphérique prédictive *Pp* et la température prédictive *Tp*, et de la marge de puissance de l'installation motrice 20.

Cette marge de puissance de chaque moteur peut être égale à la valeur de la marge de puissance déterminée lors du dernier contrôle de santé moteur.

Cette marge de puissance de chaque moteur peut également être déterminée en prenant en compte le temps d'utilisation depuis ce dernier contrôle de santé moteur, ainsi que le temps de vol nécessaire pour atteindre le point où sera réalisée la manœuvre prédéterminée. Dans cette hypothèse, la dixième détermination 151 de la marge de puissance de l'installation motrice 20 comporte des étapes complémentaires :

- une onzième détermination 155 d'une courbe d'évolution de la marge de puissance de chaque moteur 21,22 de l'installation motrice 20 en fonction d'au moins deux derniers contrôles de santé moteur de l'installation motrice 20 réalisés préalablement, cette courbe d'évolution de la marge de puissance étant stockée dans la mémoire 3,
- une douzième détermination 156 d'un temps d'atteinte *Ts* à l'altitude prédictive *Zp* par l'aéronef 10 effectuée de préférence en divisant la variation d'altitude *ΔZ* entre l'altitude prédictive *Zp* et l'altitude courante *Zc* de l'aéronef 10 par la vitesse de descente *Vz*, et
- une treizième détermination 157 de la marge de puissance de l'installation motrice 20 à partir de la courbe d'évolution de la marge de puissance de l'installation motrice 20 et en prenant en compte le temps de fonctionnement de l'installation motrice 20 depuis un dernier contrôle de santé moteur réalisé jusqu'à l'instant courant et en prenant en compte le temps d'atteinte *Ts*.

Un exemple d'une courbe d'évolution de la marge de puissance d'un moteur 21,22 est représenté sur la figure 7.

Cette courbe d'évolution de la marge de puissance d'un moteur 21,22 a été construite grâce aux mesures A,B,C,D de la marge de puissance obtenues lors des derniers contrôles de santé moteur réalisés respectivement aux instants $t_A$, $t_B$, $t_C$, $t_D$, cette marge de puissance étant la différence entre la puissance réellement disponible au niveau de l'installation motrice 20 et la puissance minimale garantie *P_G* de l'installation motrice 20. Dès lors, connaissant le temps de fonctionnement de l'installation motrice 20 jusqu'à l'instant courant $t_E$ et le temps d'atteinte *Ts* de l'altitude prédictive *Zp* par l'aéronef 10, on peut estimer au point F la marge de puissance réellement disponible au niveau de l'installation motrice 20 vis-à-vis de la puissance minimale garantie *P_G* à l'instant $t_F$ auquel l'aéronef 10 arrivera au point de réalisation de la manœuvre prédéterminée, à savoir à l'altitude prédictive *Zp*.

La marge de puissance réellement disponible au niveau de l'installation motrice 20 à l'instant courant $t_E$ correspondant au point E peut également être déterminée par un contrôle santé moteur effectué en cours de vol. Cette marge de puissance réellement disponible au point E peut ainsi être intégrée à la courbe d'évolution avant d'estimer la marge de puissance réellement disponible au niveau de l'installation motrice 20 à l'instant $t_F$.

Au cours d'une cinquième détermination 160, on détermine au moins une puissance caractéristique de l'installation motrice 20 nécessaire à la réalisation d'une manœuvre prédéterminée de l'aéronef 10. Une puissance caractéristique de l'installation motrice 20 nécessaire à la réalisation d'une manœuvre prédéterminée de l'aéronef 10 est déterminée par le calculateur 2 et grâce à des courbes de performances relatives à la manœuvre prédéterminée stockées dans la mémoire 3. Une manœuvre prédéterminée de l'aéronef 10 est par exemple un vol stationnaire de l'aéronef 10 hors effet de sol ou bien un vol stationnaire dans l'effet de sol.

Le procédé peut ensuite comporter une étape supplémentaire d'affichage 200 sur une même représentation de type graphique, sur le dispositif de visualisation 4, simultanément d'une puissance maximale disponible au niveau de l'installation motrice 20 et d'au moins une puissance caractéristique de l'installation motrice 20 nécessaire à la réalisation d'une manœuvre prédéterminée de l'aéronef 10. La puissance minimale garantie $P_G$ peut également être affichée sur cette représentation de type graphique.

La représentation de type graphique sur le dispositif de visualisation 4 peut prendre plusieurs formes telles qu'un cadran 30 de forme sensiblement circulaire représenté sur les figures 4 et 5 ou bien une échelle verticale 40 représentée sur la figure 6.

Sur la figure 4, une aiguille 31 est mobile en rotation sur le cadran 30 et indique respectivement la puissance instantanée fournie par l'installation motrice 20. Des repères 34,35 positionnés à l'extérieur du cadran 30 indiquent deux puissances caractéristiques de l'installation motrice 20 nécessaires à la réalisation d'un vol stationnaire de l'aéronef 10 hors effet de sol et un vol stationnaire dans l'effet de sol. La position de chaque repère 34,35 peut changer selon les conditions de vol de l'aéronef 10 et selon les conditions environnementales entourant l'aéronef 10. Les puissances caractéristiques et la puissance instantanée sont représentées sur le cadran 30 selon un pourcentage de la puissance maximale disponible au niveau de l'installation motrice 20, cette puissance maximale correspondant au repère 39 représentant une valeur de 100% sur le cadran 30.

Cependant, les puissances caractéristiques, la puissance instantanée et la puissance maximale peuvent être représentées sur le cadran 30 selon un pourcentage d'une valeur de référence de puissance.

En outre, les graduations du cadran 30 vont au-delà de 100%, car la puissance maximale correspond généralement à un fonctionnement normal et continu de l'aéronef 10 et des moteurs en particulier, mais peut être dépassée de façon transitoire par la puissance instantanée. De plus, une puissance caractéristique peut dépasser la puissance maximale signifiant que la manœuvre prédéterminée ne peut pas être réalisée de façon sûre dans les conditions de vol que rencontrera l'aéronef 10 pour la réalisation de la manœuvre prédéterminée.

Ainsi, le pilote visualise facilement et rapidement d'une part une première marge dont il dispose entre la puissance instantanée et la puissance maximale et d'autre part une seconde marge dont il dispose entre chaque puissance caractéristique et la puissance maximale. En conséquence, le pilote peut adapter l'utilisation de la puissance de l'installation motrice 20 selon la première marge et anticiper la réalisation de la manœuvre prédéterminée selon la seconde marge.

Sur la figure 5, les indications de puissance sont représentées pour chaque moteur 21,22 de l'installation motrice 20. De fait, deux aiguilles 31,31' sont mobiles en rotation sur le cadran 30 et indiquent respectivement la puissance instantanée fournie par chacun des moteurs 21,22 de l'installation motrice 20. Les repères 34,35 indiquent deux puissances caractéristiques de chaque moteur 21,22 nécessaires à la réalisation d'un vol stationnaire de l'aéronef 10 hors effet de sol et un vol stationnaire dans l'effet de sol et le repère 39 indique la puissance maximale disponible au niveau de chaque moteur 21,22.

Par ailleurs, quel que soit le mode réalisation, le procédé de détermination prédictive d'au moins une puissance caractéristique nécessaire à une réalisation d'une manœuvre prédéterminée d'un aéronef 10 est réalisé de préférence lorsque l'aéronef 10 est en vol stabilisé. A savoir que des paramètres caractéristiques de l'aéronef 10, et en particulier une vitesse de descente $Vz$ et une vitesse propre $Vp$ de l'aéronef 10 ainsi qu'un couple $Cm$ fourni par l'installation motrice 20, sont considérés comme stables simultanément.

Afin de déterminer si un paramètre caractéristique de l'aéronef 10 est stable, un filtre passe-haut, typiquement de type « wash out » est par exemple appliqué à ce paramètre caractéristique. Ce filtre passe-haut a une constante de temps τ. Ce paramètre caractéristique de l'aéronef 10 est par exemple considéré comme stable lorsque la différence entre deux valeurs consécutives séparées par cette constante de temps τ de ce paramètre caractéristique est inférieure à un seuil prédéterminé. Ce paramètre caractéristique peut également être considéré comme stable lorsqu'un dérivateur de ce filtre passe-haut est inférieur à un autre seuil prédéterminé.

Par exemple, si un paramètre caractéristique est le couple fourni par l'installation motrice 20, on peut considérer qu'une variation de ce couple inférieure à 1% sur une durée d'une minute est un cas de stabilité. Le seuil appliqué au filtre passe-haut peut alors être égale à 1/60%/s dès lors que le couple de l'installation motrice 20 est maintenu inférieur à ce seuil sur quelques cycles de mesures correspondant à une dizaine de secondes.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

**Revendications**

1. Procédé de détermination prédictive d'au moins une puissance caractéristique nécessaire à une réalisation d'une manœuvre prédéterminée d'un aéronef à voilure tournante (10), ledit aéronef (10) comportant une installation motrice (20), une pluralité de capteurs (5-8), au moins un calculateur (2), au moins une mémoire (3) et au moins un dispositif de visualisation (4),

ledit procédé comportant les étapes principales suivantes :

- une première mesure (110) d'une pression atmosphérique courante $Pc$ et d'une température courante $Tc$ extérieures audit aéronef (10) à une altitude courante $Zc$ dudit aéronef (10),
- une première détermination (120) d'au moins un paramètre relatif soit à ladite altitude courante $Zc$ dudit aéronef (10), soit à une altitude prédictive $Zp$ de réalisation de ladite manœuvre prédéterminée dudit aéronef (10), soit à ladite altitude courante $Zc$ dudit aéronef (10) et à ladite altitude prédictive $Zp$ de réalisation de ladite manœuvre prédéterminée dudit aéronef (10),
- une deuxième détermination (130) d'une pression atmosphérique prédictive $Pp$ à ladite altitude prédictive $Zp$,
- une troisième détermination (140) d'une température prédictive $Tp$ à ladite altitude prédictive $Zp$,
- une quatrième détermination (150) d'une puissance maximale disponible au niveau de ladite installation motrice (20) à ladite altitude prédictive $Zp$ en prenant en compte ladite pression atmosphérique prédictive $Pp$ et ladite température prédictive $Tp$,
- une cinquième détermination (160) d'au moins une puissance caractéristique de ladite installation motrice (20) nécessaire à ladite réalisation de ladite manœuvre prédéterminée dudit aéronef (10).

2. Procédé selon la revendication 1,
**caractérisé en ce qu'**au cours de ladite première détermination (120), un seul paramètre relatif à ladite altitude courante $Zc$ et à ladite altitude prédictive $Zp$ est déterminé et est une variation d'altitude $\Delta Z$ entre ladite altitude courante $Zc$ et ladite altitude prédictive $Zp$.

3. Procédé selon la revendication 1,
**caractérisé en ce qu'**au cours de ladite première détermination (120), deux paramètres relatifs soit à ladite altitude courante $Zc$, soit à ladite altitude courante $Zc$ et à ladite altitude prédictive $Zp$ sont déterminés, un premier paramètre étant ladite altitude courante $Zc$ et un second paramètre étant une variation d'altitude $\Delta Z$ entre ladite altitude courante $Zc$ et ladite altitude prédictive $Zp$.

4. Procédé selon l'une quelconque des revendications 2 à 3,
**caractérisé en ce que** ladite première détermination (120) comporte une deuxième mesure (121) d'une hauteur courante $Hc$ dudit aéronef (10) par rapport au sol, ladite variation d'altitude $\Delta Z$ étant égale à ladite hauteur courante $Hc$.

5. Procédé selon l'une quelconque des revendications 2 à 3,
**caractérisé en ce que** ladite première détermination (120) comporte les sous-étapes suivantes :

- une sixième détermination (122) d'une vitesse de descente $Vz$ dudit aéronef (10),
- une définition (123) d'un temps d'atteinte $Ts$ de ladite altitude prédictive $Zp$ par ledit aéronef (10), et
- un premier calcul (124) de ladite variation d'altitude $\Delta Z$ égale au produit de ladite vitesse de descente $Vz$ et dudit temps d'atteinte $Ts$.

6. Procédé selon la revendication 1,
**caractérisé en ce qu'**au cours de ladite première détermination (120), deux paramètres relatifs soit à ladite altitude courante $Zc$, soit à ladite altitude prédictive $Zp$ sont déterminés, un premier paramètre étant ladite altitude courante $Zc$ et un second paramètre étant ladite altitude prédictive $Zp$, une variation d'altitude $\Delta Z$ étant égale à une différence entre ladite altitude courante $Zc$ et ladite altitude prédictive $Zp$.

7. Procédé selon la revendication 6,
**caractérisé en ce qu'**au cours de ladite première détermination (120), ladite altitude prédictive $Zp$ est extraite d'une base de données terrain.

8. Procédé selon la revendication 7,
**caractérisé en ce que** ladite première détermination (120) comporte les sous-étapes suivantes :

- une septième détermination (125) d'une position courante dudit aéronef (10), et
- une première estimation (126) de ladite altitude prédictive $Zp$ égale à une altitude du terrain enregistré dans ladite base de données terrain à une verticale de ladite position courante dudit aéronef (10).

9. Procédé selon la revendication 7,
**caractérisé en ce que** ladite première détermination (120) comporte les sous-étapes suivantes :

- une septième détermination (125) d'une position courante dudit aéronef (10),
- une deuxième estimation (127) d'une trajectoire courante dudit aéronef (10), et
- une troisième estimation (128) de ladite altitude prédictive $Zp$ égale à une altitude d'un point de contact entre ladite trajectoire courante dudit aéronef (10) et le terrain enregistré dans ladite base de données terrain.

10. Procédé selon l'une quelconque des revendications 2 à 5,

**caractérisé en ce que**, lorsqu'au cours de ladite première détermination (120), un seul paramètre relatif à ladite altitude courante $Zc$ et à ladite altitude prédictive $Zp$ est déterminé, ladite deuxième détermination (130) de ladite pression atmosphérique prédictive $Pp$ comporte les sous-étapes suivantes :

- une quatrième estimation (131) de ladite altitude courante $Zc$ en fonction uniquement de ladite pression atmosphérique courante $Pc$ ou bien en fonction de ladite pression atmosphérique courante $Pc$ et de ladite température courante $Tc$,
- une huitième détermination (132) d'une variation de pression atmosphérique $\Delta P$ entre ladite altitude courante $Zc$ et ladite altitude prédictive $Zp$ en fonction de ladite variation d'altitude $\Delta Z$ et à l'aide de courbes de variation de ladite pression atmosphérique avec l'altitude, et en fonction de ladite altitude courante $Zc$, et
- un deuxième calcul (133) de ladite pression atmosphérique prédictive $Pp$, ladite pression atmosphérique prédictive $Pp$ étant déterminée en ajoutant ladite variation de pression atmosphérique $\Delta P$ à ladite pression atmosphérique courante $Pc$.

11. Procédé selon l'une quelconque des revendications 3 à 9, **caractérisé en ce que**, lorsqu'au cours de ladite première détermination (120), deux paramètres relatifs soit à ladite altitude courante $Zc$, soit à ladite altitude prédictive $Zp$, soit à ladite altitude courante $Zc$ et à ladite altitude prédictive $Zp$ sont déterminés, ladite deuxième détermination (130) de ladite pression atmosphérique prédictive $Pp$ comporte les sous-étapes suivantes :

- un troisième calcul (134) de deux pressions normales respectivement pour ladite altitude courante $Zc$ et pour ladite altitude prédictive $Zp$ en appliquant une formule de nivellement barométrique,
- une neuvième détermination (135) d'une variation de pression atmosphérique $\Delta P$ entre ladite altitude courante $Zc$ et ladite altitude prédictive $Zp$, ladite variation de pression atmosphérique $\Delta P$ étant égale à la différence entre lesdites deux pressions normales relatives à ladite altitude courante $Zc$ et à ladite altitude prédictive $Zp$, et
- un quatrième calcul (136) de ladite pression atmosphérique prédictive $Pp$, ladite pression atmosphérique prédictive $Pp$ étant déterminée en ajoutant ladite variation de pression atmosphérique $\Delta P$ à ladite pression atmosphérique courante $Pc$.

12. Procédé selon l'une quelconque des revendications 2 à 11,

**caractérisé en ce que** ladite troisième détermination (140) de ladite température prédictive $Tp$ comporte :

- un cinquième calcul (141) d'une variation de température $\Delta T$ entre ladite altitude courante $Zp$ et ladite altitude prédictive $Zp$ en fonction de ladite variation d'altitude $\Delta Z$, et
- un sixième calcul (142) de ladite température prédictive $Tp$ à ladite altitude prédictive $Zp$, ladite température prédictive $Tp$ étant déterminée en ajoutant ladite variation de température $\Delta T$ à ladite température courante $Tc$.

13. Procédé selon l'une quelconque des revendications 1 à 12,

**caractérisé en ce que** ledit procédé comporte une étape supplémentaire (200) d'affichage simultané de ladite puissance maximale disponible au niveau de ladite installation motrice (20) et d'au moins une puissance caractéristique de ladite installation motrice (20) nécessaire à ladite réalisation d'une manœuvre prédéterminée dudit aéronef (10) sur une même représentation de type graphique sur un dispositif de visualisation (4).

14. Procédé selon la revendication 13,

**caractérisé en ce que** lors de ladite étape supplémentaire (200) dudit affichage, une puissance minimale garantie $P_G$ de ladite installation motrice (20) est affichée sur ladite représentation de type graphique, ladite puissance minimale garantie $P_G$ étant déterminée en fonction de ladite température prédictive $Tp$ et de ladite pression atmosphérique prédictive $Pp$ à ladite altitude prédictive $Zp$.

15. Procédé selon l'une quelconque des revendications 1 à 14,

**caractérisé en ce que** ladite quatrième détermination (150) de ladite puissance maximale disponible au niveau de ladite installation motrice (20) comporte les étapes complémentaires suivantes :

- une dixième détermination (151) d'une marge de puissance de ladite installation motrice (20) vis-à-vis d'une puissance minimale garantie $P_G$, ladite marge de puissance caractérisant un état de vieillissement de ladite installation motrice (20), et
- un septième calcul (152) de ladite puissance maximale disponible au niveau de ladite installation motrice (20), ladite puissance maximale disponible étant égale à la somme de ladite puissance minimale garantie $P_G$ et de ladite marge de puissance de ladite installation motrice (20).

**16.** Procédé selon la revendication 15, **caractérisé en ce que** ladite dixième détermination (151) de ladite marge de puissance de ladite installation motrice (20) comporte les étapes complémentaires suivantes :

- une onzième détermination (155) d'une courbe d'évolution de ladite marge de puissance de ladite installation motrice (20) en fonction d'au moins deux derniers contrôles de santé moteur de ladite installation motrice (20) réalisés préalablement,
- une douzième détermination (156) d'un temps d'atteinte *Ts* de ladite altitude prédictive *Zp* par ledit aéronef (10), et
- une treizième détermination (157) de ladite marge de puissance de ladite installation motrice (20) à partir de ladite courbe d'évolution de ladite marge de puissance de ladite installation motrice (20) et en prenant en compte le temps de fonctionnement de ladite installation motrice (20) depuis un dernier contrôle de santé moteur réalisé jusqu'à l'instant courant et en prenant en compte ledit temps d'atteinte *Ts.*

**17.** Procédé selon l'une quelconque des revendications 1 à 16, **caractérisé en ce qu'**une manœuvre prédéterminée dudit aéronef (10) est un vol stationnaire dudit aéronef (10) hors effet de sol ou bien un vol stationnaire dans ledit effet de sol.

**18.** Procédé selon l'une quelconque des revendications 1 à 17, **caractérisé en ce que** ledit procédé est réalisé lorsque ledit aéronef (10) est en vol stabilisé, un vol dudit aéronef (10) étant considéré comme stabilisé lorsqu'une vitesse de descente *Vz* et une vitesse propre *Vp* dudit aéronef (10) ainsi qu'un couple *Cm* fourni par ladite installation motrice (20) sont considérés comme stables simultanément.

**19.** Procédé selon la revendication 18, **caractérisé en ce que** ladite vitesse de descente *Vz,* ladite vitesse propre *Vp* et ledit couple *Cm* sont des paramètres caractéristiques dudit aéronef (10) et un paramètre caractéristique est considéré comme stable lorsque, ledit paramètre caractéristique étant appliqué à un filtre passe-haut, typiquement de type « wash out », avec une constante de temps $\tau$, une différence entre deux valeurs consécutives séparées par ladite constante de temps $\tau$ dudit paramètre caractéristique est inférieure à un seuil prédéterminé.

**20.** Procédé selon la revendication 19, **caractérisé en ce que** des valeurs obtenues par ledit filtre pour ladite vitesse de descente *Vz,* ladite vitesse propre *Vp* et ledit couple *Cm,* sont utilisées dans les calculs effectués par ledit procédé de détermination prédictive d'au moins une puissance caractéristique nécessaire à une réalisation d'une manœuvre prédéterminée d'un aéronef à voilure tournante (10).

**21.** Dispositif (1) de détermination prédictive d'au moins une puissance nécessaire à une réalisation d'une manœuvre prédéterminée d'un aéronef à voilure tournante (10), ledit dispositif (1) comportant une pluralité de capteurs (5-8), au moins un calculateur (2), au moins une mémoire (3) et au moins un dispositif de visualisation (4), lesdits capteurs (5-8) fournissant des mesures de différentes informations relatives à l'environnement dudit aéronef (10) et/ou à l'état et au fonctionnement dudit aéronef (10) et de ses équipements et/ou à la position et aux déplacements dudit aéronef (10) par rapport à son environnement, chaque calculateur (2) recevant lesdites mesures desdits capteurs (5-8) et traitant lesdites informations, **caractérisé en ce que** ladite mémoire (3) stocke des courbes de performances dudit aéronef (10), une courbe d'évolution de ladite marge de puissance de ladite installation motrice (20), une ou plusieurs séries de courbes de variation de ladite pression atmosphérique en fonction de l'altitude et des instructions de calcul, ledit calculateur (2) utilisant lesdites instructions de calcul afin de mettre en œuvre le procédé de détermination de paramètres caractéristiques du fonctionnement dudit aéronef (10) selon l'une quelconque des revendications 1 à 20.

**Patentansprüche**

**1.** Verfahren zur vorausschauenden Bestimmung mindestens einer charakteristischen Leistung, die zur Durchführung eines vorgegebenen Manövers eines Drehflügelflugzeugs (10) erforderlich ist, wobei das Flugzeug (10) ein Antriebsaggregat (20), eine Mehrzahl von Sensoren (5-8), mindestens einen Rechner (2), mindestens einen Speicher (3) und mindestens eine Anzeigevorrichtung (4) umfasst, wobei das Verfahren die folgenden Hauptschritte umfasst:

- eine erste Messung (110) eines aktuellen Luftdrucks *Pc* und einer aktuellen Temperatur *Tc* außerhalb des Flugzeugs (10) bei einer aktuellen Höhe *Zc* des Flugzeugs (10),
- eine erste Bestimmung (120) mindestens eines Parameters, der sich entweder auf die aktuelle Höhe *Zc* des Flugzeugs (10) oder auf eine Vorhersagehöhe *Zp*, bei der das vorgegebene Manöver des Flugzeugs (10) durchgeführt wird, oder auf die aktuelle Höhe *Zc* des Flugzeugs (10) und auf die Vorhersagehöhe *Zp*, bei der das vorgegebene Manöver des Flugzeugs (10) durchgeführt wird, bezieht,

- eine zweite Bestimmung (130) eines Vorhersageluftdrucks *Pp* auf der Vorhersagehöhe *Zp*,
- eine dritte Bestimmung (140) einer Vorhersagetemperatur *Tp* auf der Vorhersagehöhe *Zp*,
- eine vierte Bestimmung (150) einer maximalen Leistung, die an dem Antriebsaggregat (20) auf der Vorhersagehöhe *Zp* verfügbar ist, unter Berücksichtigung des Vorhersageluftdrucks *Pp* und der Vorhersagetemperatur *Tp*,
- eine fünfte Bestimmung (160) von mindestens einer charakteristischen Leistung des Antriebsaggregats (20), die zur Durchführung des vorgegebenen Manöver des Flugzeugs (10) notwendig ist.

2. Verfahren nach Anspruch 1,
**dadurch gekennzeichnet, dass** während der ersten Bestimmung (120) ein einziger sich auf die aktuelle Höhe *Zc* und die Vorhersagehöhe *Zp* beziehender Parameter bestimmt wird, der eine Höhenänderung *ΔZ* zwischen der aktuellen Höhe *Zc* und der Vorhersagehöhe *Zp* ist.

3. Verfahren nach Anspruch 1,
**dadurch gekennzeichnet, dass** während der ersten Bestimmung (120) zwei Parameter bestimmt werden, die sich entweder auf die aktuelle Höhe *Zc* oder auf die aktuelle Höhe *Zc* und auf die Vorhersagehöhe *Zp* beziehen, wobei ein erster Parameter die aktuelle Höhe *Zc* ist und ein zweiter Parameter eine Höhenänderung *ΔZ* zwischen der aktuellen Höhe *Zc* und der Vorhersagehöhe *Zp* ist.

4. Verfahren nach einem der Ansprüche 2 bis 3,
**dadurch gekennzeichnet, dass** die erste Bestimmung (120) eine zweite Messung (121) einer aktuellen Höhe *Hc* des Flugzeugs (10) relativ zum Boden umfasst, wobei die Höhenänderung *ΔZ* gleich der aktuellen Höhe *Hc* ist.

5. Verfahren nach einem der Ansprüche 2 bis 3,
**dadurch gekennzeichnet, dass** die erste Bestimmung (120) die folgenden Teilschritte umfasst:

     - eine sechste Bestimmung (122) einer Sinkgeschwindigkeit *Vz* des Flugzeugs (10),
     - eine Definition (123) einer Ankunftszeit *Ts* des Flugzeugs (10) auf der Vorhersagehöhe *Zp*, und
     - eine erste Berechnung (124) der Höhenänderung *ΔZ*, die gleich dem Produkt aus der genannten Sinkgeschwindigkeit *Vz* und der genannten Ankunftszeit *Ts* ist.

6. Verfahren nach Anspruch 1,
**dadurch gekennzeichnet, dass** während der ersten Bestimmung (120) zwei Parameter bestimmt werden, die sich entweder auf die aktuelle Höhe *Zc* oder auf die Vorhersagehöhe *Zp* beziehen, wobei ein erster Parameter die aktuelle Höhe *Zc* und ein zweiter Parameter die Vorhersagehöhe *Zp* ist und eine Höhenänderung *ΔZ* gleich einer Differenz zwischen der aktuellen Höhe *Zc* und der Vorhersagehöhe *Zp* ist.

7. Verfahren nach Anspruch 6,
**dadurch gekennzeichnet, dass** während der ersten Bestimmung (120) die Vorhersagehöhe Zp aus einer Geländedatenbank extrahiert wird.

8. Verfahren nach Anspruch 7,
**dadurch gekennzeichnet, dass** die erste Bestimmung (120) die folgenden Teilschritte umfasst:

     - eine siebte Bestimmung (125) einer aktuellen Position des Flugzeugs (10), und
     - eine erste Schätzung (126) der Vorhersagehöhe *Zp* gleich einer in der Geländedatenbank aufgezeichneten Höhe des Geländes an einer Vertikalen zur aktuellen Position des Flugzeugs (10).

9. Verfahren nach Anspruch 7,
**dadurch gekennzeichnet, dass** die erste Bestimmung (120) die folgenden Teilschritte umfasst:

     - eine siebte Bestimmung (125) einer aktuellen Position des Flugzeugs (10),
     - eine zweite Schätzung (127) einer aktuellen Flugbahn des Flugzeugs (10), und
     - eine dritte Schätzung (128) der Vorhersagehöhe Zp gleich einer Höhe eines Berührungspunktes zwischen der aktuellen Flugbahn des Flugzeugs (10) und dem in der Geländedatenbank aufgezeichneten Gelände.

10. Verfahren nach einem der Ansprüche 2 bis 5,
**dadurch gekennzeichnet, dass**, wenn während der ersten Bestimmung (120) ein einziger Parameter bestimmt wird, der sich auf die aktuelle Höhe *Zc* und auf die Vorhersagehöhe *Zp* bezieht, die zweite Bestimmung (130) des Vorhersageluftdrucks *Pp* die folgenden Unterschritte umfasst:

     - eine vierte Schätzung (131) der aktuellen Höhe *Zc* als eine Funktion allein des aktuellen Luftdrucks Pc oder als eine Funktion des aktuellen Luftdrucks *Pc* und der aktuellen Temperatur *Tc*,
     - eine achte Bestimmung (132) einer Änderung des Luftdrucks *ΔP* zwischen der aktuellen Höhe *Zc* und der Vorhersagehöhe *Zp* als eine Funktion der Höhenänderung *ΔZ* und unter Verwendung von Kurven der Änderung des Luftdrucks mit der Höhe und als eine Funktion der aktuellen Höhe *Zc*, und
- eine zweite Berechnung (133) des Vorhersageluftdrucks *Pp*, wobei der Vorhersageluftdruck *Pp* durch Addieren der Änderung des Luftdrucks *ΔP* zu dem aktuellen Luftdruck *Pc* bestimmt wird.

11. Verfahren nach einem der Ansprüche 3 bis 9, **dadurch gekennzeichnet, dass**, wenn bei der ersten Bestimmung (120) zwei Parameter bestimmt werden, die sich entweder auf die aktuelle Höhe *Zc* oder auf die Vorhersagehöhe *Zp* oder auf die aktuelle Höhe *Zc* und die Vorhersagehöhe *Zp* beziehen, die zweite Bestimmung (130) des Vorhersageluftdrucks *Pp* die folgenden Unterschritte umfasst:

- eine dritte Berechnung (134) von zwei Normaldrücken für die aktuelle Höhe *Zc* bzw. für die Vorhersagehöhe *Zp* durch Anwendung einer barometrischen Höhenformel,
- eine neunte Bestimmung (135) einer Änderung des Luftdrucks *ΔP* zwischen der aktuellen Höhe *Zc* und der Vorhersagehöhe *Zp,* wobei die Änderung des Luftdrucks *ΔP* gleich der Differenz zwischen den beiden Normaldrücken relativ zu der aktuellen Höhe *Zc* und der Vorhersagehöhe *Zp* ist, und
- eine vierte Berechnung (136) des Vorhersageluftdrucks *Pp,* wobei der Vorhersageluftdruck *Pp* durch Addieren der Änderung des Luftdrucks *ΔP* zu dem aktuellen Luftdruck *Pc* bestimmt wird.

12. Verfahren nach einem der Ansprüche 2 bis 11, **dadurch gekennzeichnet, dass** die dritte Bestimmung (140) der Vorhersagetemperatur Tp umfasst:

- eine fünfte Berechnung (141) einer Temperaturänderung *ΔT* zwischen der aktuellen Höhe *Zp* und der Vorhersagehöhe *Zp* in Abhängigkeit von der Höhenänderung *ΔZ*, und
- eine sechste Berechnung (142) der Vorhersagetemperatur *Tp* bei der Vorhersagehöhe *Zp,* wobei die Vorhersagetemperatur *Tp* durch Addieren der Temperaturänderung *ΔT* zu der aktuellen Temperatur *Tc* bestimmt wird.

13. Verfahren nach einem der Ansprüche 1 bis 12, **dadurch gekennzeichnet, dass** das Verfahren einen zusätzlichen Schritt (200) des gleichzeitigen Anzeigens der am Antriebsaggregat (20) verfügbaren maximalen Leistung und mindestens einer für die Durchführung eines vorgegebenen Manövers des Flugzeugs (10) erforderlichen charakteristischen Leistung des Antriebsaggregats (20) auf ein und derselben graphischen Darstellung auf einer Anzeigevorrichtung (4) umfasst.

14. Verfahren nach Anspruch 13, **dadurch gekennzeichnet, dass** während des zusätzlichen Schritts (200) des Anzeigens eine garantierte Mindestleistung $P_G$ des Antriebsaggregats (20) auf der graphischen Darstellung angezeigt wird, wobei die garantierte Mindestleistung $P_G$ in Abhängigkeit von der Vorhersagetemperatur *Tp* und dem Vorhersageatmosphärendruck *Pp* bei der Vorhersagehöhe *Zp* bestimmt wird.

15. Verfahren nach einem der Ansprüche 1 bis 14, **dadurch gekennzeichnet, dass** die vierte Bestimmung (150) der am Antriebsaggregat (20) maximal verfügbaren Leistung die folgenden zusätzlichen Schritte umfasst:

- eine zehnte Bestimmung (151) einer Leistungsspanne des Antriebsaggregats (20) in Bezug auf eine garantierte Mindestleistung $P_G$, wobei die Leistungsspanne einen Alterungszustand des Antriebsaggregats (20) charakterisiert, und
- eine siebte Berechnung (152) der am Antriebsaggregat (20) maximal verfügbaren Leistung, wobei die maximal verfügbare Leistung gleich der Summe aus der garantierten Mindestleistung $P_G$ und der Leistungsspanne des Antriebsaggregats (20) ist.

16. Verfahren nach Anspruch 15, **dadurch gekennzeichnet, dass** die zehnte Bestimmung (151) der Leistungsspanne des Antriebsaggregats (20) die folgenden zusätzlichen Schritte umfasst:

- eine elfte Bestimmung (155) einer Entwicklungskurve der Leistungsspanne des Antriebsaggregats (20) in Abhängigkeit von mindestens zwei letzten, zuvor durchgeführten Antriebszustandsüberprüfungen des Antriebsaggregats (20),
- eine zwölfte Bestimmung (156) einer Ankunftszeit Ts des Flugzeugs (10) auf der Vorhersagehöhe Zp, und
- eine dreizehnte Bestimmung (157) der Leistungsspanne des Antriebsaggregats (20) aus der Entwicklungskurve der Leistungsspanne des Antriebsaggregats (20) und unter Berücksichtigung der Betriebszeit des Antriebsaggregats (20) ab einer letzten durchgeführten Motorzustandsprüfung bis zum aktuellen Zeitpunkt und unter Berücksichtigung der Ankunftszeit Ts.

17. Verfahren nach einem der Ansprüche 1 bis 16, **dadurch gekennzeichnet, dass** ein vorgegebenes Manöver des Flugzeugs (10) ein Schwebeflug des Flugzeugs (10) ohne Bodeneffekt oder ein Schwebeflug mit Bodeneffekt ist.

**18.** Verfahren nach einem der Ansprüche 1 bis 17, **dadurch gekennzeichnet, dass** das Verfahren durchgeführt wird, wenn sich das Flugzeug (10) im stabilisierten Flug befindet, wobei ein Flug des Flugzeugs (10) als stabilisiert betrachtet wird, wenn eine Sinkgeschwindigkeit $Vz$ und eine Eigengeschwindigkeit $Vp$ des Flugzeugs (10) sowie ein vom Antriebsaggregat (20) geliefertes Drehmoment $Cm$ gleichzeitig als stabil betrachtet werden.

**19.** Verfahren nach Anspruch 18, **dadurch gekennzeichnet, dass** die Sinkgeschwindigkeit $Vz$, die Eigengeschwindigkeit $Vp$ und das Drehmoment $Cm$ charakteristische Parameter des Flugzeugs (10) sind und ein charakteristischer Parameter als stabil angesehen wird, wenn bei Anlegen an einen Hochpassfilter, typischerweise vom "Wash out"-Typ, mit einer Zeitkonstante $\tau$, eine Differenz zwischen zwei aufeinanderfolgenden Werten, die durch die Zeitkonstante $\tau$ des charakteristischen Parameters getrennt sind, kleiner als ein vorgegebener Schwellenwert ist.

**20.** Verfahren nach Anspruch 19, **dadurch gekennzeichnet, dass** Werte, die durch den Filter für die Sinkgeschwindigkeit $Vz$, die Eigengeschwindigkeit $Vp$ und das Drehmoment $Cm$ erhalten werden, in den Berechnungen verwendet werden, die durch das Verfahren zur vorausschauenden Bestimmung mindestens einer charakteristischen Leistung, die zur Durchführung eines vorgegebenen Manövers eines Drehflügelflugzeugs (10) erforderlich ist, durchgeführt werden.

**21.** Vorrichtung (1) zur vorausschauenden Bestimmung mindestens einer Leistung, die zur Durchführung eines vorgegebenen Manövers eines Drehflügelflugzeugs (10) erforderlich ist, wobei die Vorrichtung (1) eine Mehrzahl von Sensoren (5-8), mindestens einen Rechner (2), mindestens einen Speicher (3) und mindestens eine Anzeigevorrichtung (4) umfasst, wobei die Sensoren (5-8) Messwerte verschiedener Informationen liefern, die sich auf die Umgebung des Flugzeugs (10) und/oder den Zustand und den Betrieb des Flugzeugs (10) und seiner Ausrüstung und/oder die Position und die Bewegungen des Flugzeugs (10) relativ zu seiner Umgebung beziehen, wobei jeder Computer (2) die Messwerte von den Sensoren (5-8) empfängt und die Informationen verarbeitet, **dadurch gekennzeichnet, dass** der Speicher (3) Leistungskurven des Flugzeugs (10), eine Entwicklungskurve der Leistungsspanne des Antriebsaggregats (20), eine oder mehrere Serien von Kurven der Veränderung des Luftdrucks in Abhängigkeit von der Höhe und Rechenanweisungen speichert, wobei der Rechner (2) die Rechenanweisungen verwendet, um das Verfahren zur Bestimmung von für den Betrieb des Flugzeugs (10) charakteristischen Parametern nach einem der Ansprüche 1 bis 20 zu implementieren.

## Claims

**1.** Method for predictive determination of at least one characteristic power necessary for performing a predetermined manoeuvre of a rotary-wing aircraft (10), said aircraft (10) comprising a power installation (20), a plurality of sensors (5-8), at least one calculator (2), at least one memory (3) and at least one display device (4), said method comprising the following main steps:

- a first measurement (110) of a current atmospheric pressure Pc and a current temperature Tc outside said aircraft (10) at a current altitude Zc of said aircraft (10),
- a first determination (120) of at least one parameter relating either to said current altitude Zc of said aircraft (10), or to a predictive altitude Zp for performing said predetermined manoeuvre of said aircraft (10), or to said current altitude Zc of said aircraft (10) and to said predictive altitude Zp for performing said predetermined manoeuvre of said aircraft (10),
- a second determination (130) of a predictive atmospheric pressure $Pp$ at said predictive altitude Zp,
- a third determination (140) of a predictive temperature $Tp$ at said predictive altitude Zp,
- a fourth determination (150) of a maximum power available from said power installation (20) at said predictive altitude Zp, taking into account said predictive atmospheric pressure $Pp$ and said predictive temperature $Tp$,
- a fifth determination (160) of at least one characteristic power of said power installation (20) necessary for performing said predetermined manoeuvre of said aircraft (10).

**2.** Method according to claim 1, **characterised in that** during said first determination (120), a single parameter relating to said current altitude Zc and to said predictive altitude $Zp$ is determined and is a variation in altitude $\Delta Z$ between said current altitude $Zc$ and said predictive altitude $Zp$.

**3.** Method according to claim 1, **characterised in that** during said first determination (120), two parameters relating either to said current altitude $Zc$ or both to said current altitude $Zc$ and to said predictive altitude $Zp$ are determined, a first parameter being said current altitude $Zc$ and a second parameter being a variation in altitude $\Delta Z$ between said current altitude $Zc$ and said predictive altitude $Zp$.

4. Method according to either claim 2 or claim 3, **characterised in that** said first determination (120) comprises a second measurement (121) of a current height $Hc$ of said aircraft (10) relative to the ground, said variation in altitude $\Delta Z$ being equal to said current height $Hc$.

5. Method according to either claim 2 or claim 3, **characterised in that** said first determination (120) comprises the following sub-steps:

   - a sixth determination (122) of a descent speed $Vz$ of said aircraft (10),
   - a definition (123) of a transit time $Ts$ for said aircraft (10) to reach said predictive altitude $Zp$, and
   - a first calculation (124) of said variation in altitude $\Delta Z$ equal to the product of said descent speed $Vz$ and said transit time $Ts$.

6. Method according to claim 1, **characterised in that** during said first determination (120), two parameters relating either to said current altitude $Zc$ or to said predictive altitude $Zp$ are determined, a first parameter being said current altitude $Zc$ and a second parameter being said predictive altitude $Zp$, a variation in altitude $\Delta Z$ being equal to a difference between said current altitude $Zc$ and said predictive altitude $Zp$.

7. Method according to claim 6, **characterised in that** during said first determination (120), said predictive altitude $Zp$ is extracted from a terrain database.

8. Method according to claim 7, **characterised in that** said first determination (120) comprises the following sub-steps:

   - a seventh determination (125) of a current position of said aircraft (10), and
   - a first estimation (126) of said predictive altitude $Zp$ equal to an altitude of the terrain recorded in said terrain database at a vertical of said current position of said aircraft (10).

9. Method according to claim 7, **characterised in that** said first determination (120) comprises the following sub-steps:

   - a seventh determination (125) of a current position of said aircraft (10),
   - a second estimation (127) of a current trajectory of said aircraft (10), and
   - a third estimation (128) of said predictive altitude $Zp$ equal to an altitude of a point of contact between said current trajectory of said aircraft (10) and the terrain recorded in said terrain database.

10. Method according to any of claims 2 to 5, **characterised in that** when, during said first determination (120), a single parameter relating to said current altitude $Zc$ and to said predictive altitude $Zp$ is determined, said second determination (130) of said predictive atmospheric pressure $Pp$ comprises the following sub-steps:

    - a fourth estimation (131) of said current altitude $Zc$ as a function only of said current atmospheric pressure $Pc$ or else as a function of said current atmospheric pressure $Pc$ and of said current temperature $Tc$,
    - an eighth determination (132) of a variation in atmospheric pressure $\Delta P$ between said current altitude $Zc$ and said predictive altitude $Zp$ as a function of said variation in altitude $\Delta Z$ and using curves of variation of said atmospheric pressure with altitude, and as a function of said current altitude $Zc$, and
    - a second calculation (133) of said predictive atmospheric pressure $Pp$, said predictive atmospheric pressure $Pp$ being determined by adding said variation in atmospheric pressure $\Delta P$ to said current atmospheric pressure Pc.

11. Method according to any of claims 3 to 9, **characterised in that** when, during said first determination (120), two parameters relating either to said current altitude Zc, or to said predictive altitude $Zp$, or both to said current altitude $Zc$ and to said predictive altitude $Zp$ are determined, said second determination (130) of said predictive atmospheric pressure $Pp$ comprises the following sub-steps:

    - a third calculation (134) of two normal pressures for said current altitude Zc and for said predictive altitude $Zp$, respectively, by applying a barometric levelling formula,
    - a ninth determination (135) of a variation in atmospheric pressure $\Delta P$ between said current altitude $Zc$ and said predictive altitude $Zp$, said variation in atmospheric pressure $\Delta P$ being equal to the difference between said two normal pressures relating to said current altitude $Zc$ and to said predictive altitude $Zp$, and
    - a fourth calculation (136) of said predictive atmospheric pressure $Pp$, said predictive atmospheric pressure $Pp$ being determined by adding said variation in atmospheric pressure $\Delta P$ to said current atmospheric pressure $Pc$.

12. Method according to any of claims 2 to 11, **characterised in that** said third determination (140) of said predictive temperature $Tp$ comprises:

    - a fifth calculation (141) of a variation in temperature $\Delta T$ between said current altitude $Zp$

and said predictive altitude $Zp$ as a function of said variation in altitude $\Delta Z$, and

- a sixth calculation (142) of said predictive temperature $Tp$ at said predictive altitude $Zp$, said predictive temperature $Tp$ being determined by adding said variation in temperature $\Delta T$ to said current temperature $Tc$.

13. Method according to any of claims 1 to 12, **characterised in that** said method comprises an additional step (200) of simultaneously displaying said maximum power available at said power installation (20) and at least one characteristic power of said power installation (20) necessary for performing a predetermined manoeuvre of said aircraft (10) on the same graphical representation on a display device (4).

14. Method according to claim 13, **characterised in that** during said additional display step (200), a guaranteed minimum power $P_G$ of said power installation (20) is displayed on said graphical representation, said guaranteed minimum power $P_G$ being determined as a function of said predictive temperature $Tp$ and of said predictive atmospheric pressure $Pp$ at said predictive altitude $Zp$.

15. Method according to any of claims 1 to 14, **characterised in that** said fourth determination (150) of said maximum power available at said power installation (20) comprises the following additional steps:

- a tenth determination (151) of a power margin of said power installation (20) with respect to a guaranteed minimum power $P_G$, said power margin characterising a state of ageing of said power installation (20), and
- a seventh calculation (152) of said maximum power available at said power installation (20), said maximum power available being equal to the sum of said minimum guaranteed power $P_G$ and said power margin of said power installation (20).

16. Method according to claim 15, **characterised in that** said tenth determination (151) of said power margin of said power installation (20) comprises the following additional steps:

- an eleventh determination (155) of an evolution curve of said power margin of said power installation (20) as a function of at least two last engine health checks of said power installation (20) previously carried out,
- a twelfth determination (156) of a transit time $Ts$ for said aircraft (10) to reach said predictive altitude $Zp$, and
- a thirteenth determination (157) of said power margin of said power installation (20) on the basis of said evolution curve of said power margin of said power installation (20) and taking into account the operating time of said power installation (20) from a last engine health check carried out up to the current instant and taking into account said transit time $Ts$.

17. Method according to any of claims 1 to 16, **characterised in that** a predetermined manoeuvre of said aircraft (10) is a hovering flight of said aircraft (10) out of ground effect or a hovering flight in said ground effect.

18. Method according to any of claims 1 to 17, **characterised in that** said method is performed when said aircraft (10) is in stabilised flight, a flight of said aircraft (10) being considered to be stabilised when a descent speed $Vz$ and an airspeed $Vp$ of said aircraft (10) and a torque $Cm$ supplied by said power installation (20) are considered to be simultaneously stable.

19. Method according to claim 18, **characterised in that** said descent speed $Vz$, said airspeed $Vp$ and said torque $Cm$ are characteristic parameters of said aircraft (10) and a characteristic parameter is considered to be stable when, said characteristic parameter being applied to a high pass filter, typically of the "washout" type, having a time constant $\tau$, a difference between two consecutive values separated by said time constant $\tau$ of said characteristic parameter is less than a predetermined threshold.

20. Method according to claim 19, **characterised in that** the values obtained by said filter for said descent speed $Vz$, said airspeed $Vp$ and said torque $Cm$ are used in the calculations performed by said method for predictive determination of at least one characteristic power necessary for performing a predetermined manoeuvre of a rotary-wing aircraft (10).

21. Device (1) for predictive determination of at least one power necessary for performing a predetermined manoeuvre of a rotary-wing aircraft (10), said device (1) comprising a plurality of sensors (5-8), at least one calculator (2), at least one memory (3) and at least one display device (4), said sensors (5-8) providing measurements of various pieces of information relating to the environment of said aircraft (10) and/or the state and operation of said aircraft (10) and its equipment and/or the position and movements of said aircraft (10) relative to its environment, each calculator (2) receiving said measurements from said sensors (5-8) and processing said information, **characterised in that** said memory (3) stores performance curves of said aircraft (10), an evolution curve of said power margin of said power installation (20), one or more series of curves of variation of said atmospheric pressure as a function of the altitude, and calculation instructions, said calculator (2) using said calculation instructions in order to implement the method for determining parameters characteristic of the operation of said aircraft (10) according to any of claims 1 to 20.

**Fig.1**

**Fig.4**

**Fig.5**

**Fig.6**

**Fig.7**

Fig.3

Fig.2

**EP 3 597 536 B1**

## RÉFÉRENCES CITÉES DANS LA DESCRIPTION

**Documents brevets cités dans la description**

- FR 2749545
- FR 2756256
- FR 3033316
- WO 2012087303 A
- US 20050278084 A
- DE 2014913
- WO 2005120954 A